# FASCICULE DE BREVET EUROPEEN

(11) **EP 1 401 964 B1**
(45) Date de publication et mention de la délivrance du brevet: **15.04.2009**
(21) Numéro de dépôt: 02747494.9
(22) Date de dépôt: 03.06.2002
(51) Int. Cl.: C09D 4/00, C09D 183/04, C09D 179/00, C03C 1/00, C09D 185/00, C08L 83/04, C07F 15/00, C08K 5/00

(54) **COMPOSITION SILICONE RETICULABLE EN ELASTOMERE PAR HYDROSILYLATION, EN PRESENCE DE CATALYSEURS METALLIQUES A BASE DE CARBENES, ET CATALYSEURS DE CE TYPE**
DURCH HYDROSILYLIERUNG , IN ANWESENHEIT VON METALLCARBENKATALYSATOREN , ZU ELASTOMEREN VERNETZBARE ORGANOSILOXAN-ZUSAMMENSETZUNGEN UND DIESE METALLKATALYSATOREN
SILICONE COMPOSITION CROSSLINKABLE INTO ELASTOMER BY HYDROSILYLATION, IN THE PRESENCE OF CARBENE-BASED METAL CATALYSTS, AND CATALYSTS

(30) Priorité: 07.06.2001 FR 0107473
(43) Date de publication de la demande: 31.03.2004
(73) Titulaire: Bluestar Silicones France, 69486 Lyon Cedex 03 (FR)
(72) Inventeur: GEORGE, Catherine, F-69130 ECULLY (FR); BLANC-MAGNARD, Delphine, F-69007 LYON (FR); POUCHELON, Alain, F-69330 MEYZIEU (FR); STERIN, Sébastien, F-69450 SAINT CYR AU MONT D`OR (FR)
(86) Numéro de dépôt international: PCT/FR2002/001863
(87) Numéro de publication internationale: WO 2002/098971

(56) Documents cités:
- EP-A- 0 061 241
- EP-A- 0 545 591
- FR-A- 2 717 481
- FR-A- 2 750 349
- FR-A- 2 801 887
- US-A- 5 278 839
- US-A- 5 426 200
- CHEMICAL ABSTRACTS, vol. 129, no. 17, 26 octobre 1998 (1998-10-26) Columbus, Ohio, US; abstract no. 216758, ENDERS,DIETER ET AL: "Diastereoselective synthesis of chiral (triazolinylidene)rhodium complexes containing an axis of chirality." XP002143369 & EUR. J. INORG. CHEM., no. 7, - 1998 pages 913-919,

## Description

L'invention concerne la catalyse de réactions d'hydrosilylation et notamment d'hydrosilylation de composés éthyléniquement et/ou acétyléniquement insaturés (par exemple oléfines ou dérivés acétyléniques), en particulier celles impliquant des polyorganosiloxanes (POS) porteurs de motifs Si-H et des POS porteurs de motifs Si*-*(*insaturation éthylénique ou acétylénique*)*.*

Plus précisément l'invention concerne des compositions silicones réticulables -de préférence en élastomères- par hydrosilylation d'au moins un PolyOrganoSiloxane -A- (POS) porteur d'insaturation(s) éthylènique(s) et/ou acétylènique(s), à l'aide d'au moins un polyorganohydrogénosiloxane -B- ,en présence d'un catalyseur -C- métallique et comprenant éventuellement au moins un inhibiteur - D- de la réaction d'hydrosilylation.

Classiquement les réactions d'hydrosilylation permettant aux silicones de réticuler, sont catalysées par des catalyseurs au platine (US 2 823 218, US 2 970 150). En pratique, à ce jour, la plupart des réactions industrielles d'hydrosilylation sont catalysées par la solution de Karstedt qui est constituée par des complexes de platine au degré d'oxydation 0. La formule générale idéale du complexe de Karstedt est Pt₂(tétraméthyldivinylsiloxane)₃: 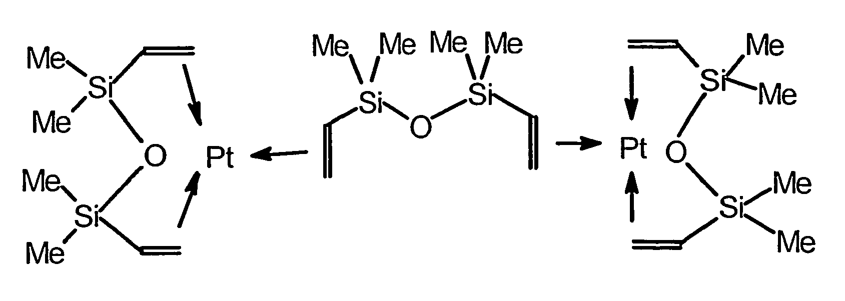 où Me représente méthyle.
Le complexe de Karstedt est préparé par mise en contact de 1,3-divinyltétraméthyldisiloxane avec de l'acide chloroplatinique (H₂P†Cl₆), en présence de NaHCO₃ et d'un solvant hydroalcoolique (isopropanol).
Ce catalyseur usuel et son obtention sont décrits dans le brevet US 3 775 452.

La très forte activité catalytique de ce type de catalyseur, même à température ambiante, est un inconvénient majeur dans le cadre de son utilisation dans les EVC polyaddition, car la réticulation de l'élastomère débute dès que l'ensemble des composants est mis en contact.

Un autre inconvénient de ce catalyseur réside dans une possible instabilité du catalyseur en cours de réaction : on a pu observer la précipitation de platine métallique et la formation de colloïdes insolubles dans le milieu réactionnel : cette instabilité du catalyseur dans le milieu réactionnel a pour effet de réduire l'activité catalytique. De plus, il en résulte des produits parfois colorés, peu appréciés de l'utilisateur.

Un autre inconvénient majeur du catalyseur de Karstedt est la formation concomitante de sous-produits de la réaction d'hydrosilylation : au côté des produits d'hydrosilylation sont isolés les produits résultant de réactions d'isomérisation de la double liaison oléfinique et/ou de réactions d'hydrogénation.

La demande de brevet non publiée FR 99 15432 du 07/12/1999 divulgue des complexes métalliques utiles comme catalyseurs d'hydrosilylation, de formule : 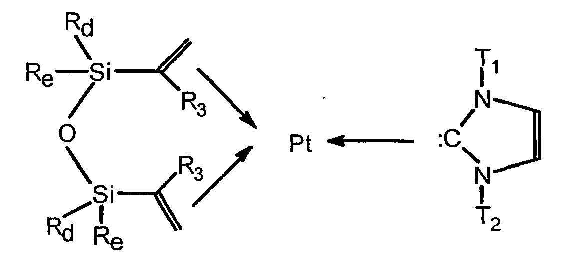 dans laquelle :
R₃ représente un atome d'hydrogène ; un groupe (C₁-C₈)alkyle ; ou un groupe (C₃-C₈)cycloalkyle éventuellement substitué par (C₁-C₄)alkyle ;
T₁ et T₂ sont identiques et représentent (C₁-C₈)alkyle ou (C₃-C₈)cycloalkyle ;
R_{d} et Rₑ sont identiques et représentent (C₁-C₈)alkyle ou (C₃-C₈)cycloalkyle;
(de préférence T₁ = T₂ = R_{d} = Rₑ = méthyle).
Ces complexes métalliques Pt/carbène sont obtenus selon une méthodologie en deux étapes illustrée par l'exemple suivant :

### 1. Préparation du carbène :

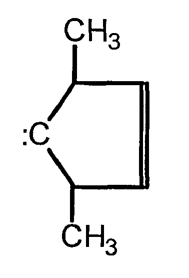

### 2. Préparation du complexe du platine de formule :

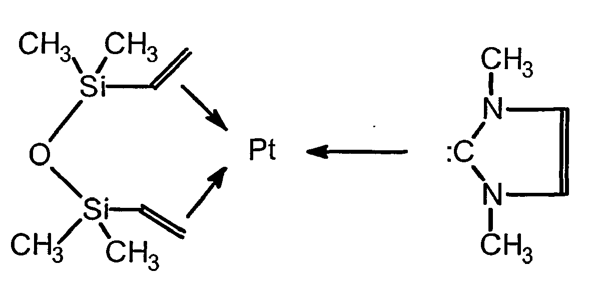

Selon cette demande antérieure non publiée, les catalyseurs sont employés pour la catalyse de réaction d'un composé à double liaison éthylénique ou à triple liaison acétylénique (composé insaturé) avec un composé présentant au moins un motif ≡Si-H de façon à former une liaison C-Si. Des exemples de composés à double liaison éthylénique sont l'éthylène, le propylène, le 1-butylène, le 1-pentène, le 2-méthylbutène-1, le 1-hexène, le 1-heptène, le 1-octène, le 3-éthylhexène-1, le 1-décène, le 4,4-diméthylnonène-1, le vinylcyclohexène, le styrène et le 2-vinylnaphtalène.
Des exemples de composés à triple liaison acétylénique sont : éthynyle, 2-propynyle, 1-propynyle et 2-pentèn-4-ynyle.
Des exemples de composés présentant au moins un motif ≡Si-H sont les polyméthylhydrogénosiloxane, polydiméthylsiloxane à groupe -SiH terminal, les copolymères méthylhydro-génodiméthylsiloxane, les copolymères méthyl-hydrogénométhyloctylsiloxane, et les polymères méthylhydrogénocyclosiloxane.

Le brevet US 5 728 839 divulgue lui aussi des complexes métalliques / carbène, préparés en deux étapes à partir de sels d'imidazolium, benzimidazolium, triazolium, tétrazolium ou pyrazolium (par exemple iodure). Ces complexes métalliques (rhodium) avec des carbènes hétérocycliques sont décrits comme pouvant être utiles comme catalyseurs d'hydrogénation ou d'hydroformylation de composés organiques insaturés, tels que des oléfines. Il n'est pas question de réticulation de silicones dans ce brevet américain.

Or, il pourrait être intéressant de disposer, dans le domaine des silicones réticulables -notamment en élastomères-, de catalyseurs actifs à chaud et peu ou pas actif à température ambiante. Cela permettrait de formuler des compositions silicones monocomposantes, réticulables à chaud et stables au stockage pendant longtemps à température ambiante (durée de vie en pot). Les compositions silicones monocomposantes sont celles qui comprennent dans un même mélange toutes les espèces réactives (POS Si-Vinyle / POS Si-H) et le catalyseur. Classiquement, pour augmenter la durée de vie en pot des compositions silicones monocomposantes, on a recours à des inhibiteurs de la réticulation. Ainsi, avec le catalyseur de Karstedt, l'emploi d'un inhibiteur est impératif et permet de faire passer, par exemple, la stabilité à température ambiante, d'une composition POS Si-Vinyle / POS Si-H de 1 min à 24H. Mais il s'agit là d'une solution coûteuse et aux performances limitées, car l'utilisation de quantités importantes d'inhibiteur est de nature à perturber le comportement de l'élastomère, lors de sa réticulation.

Dans un tel état de la technique, l'un des objectifs essentiels de l'invention est de proposer une composition silicone réticulable par hydrosilylation et comportant à titre de catalyseur un ou plusieurs complexes métalliques à base de carbènes hétérocycliques, ce catalyseur ayant une faible activité à température ambiante, de façon à permettre la réalisation de compositions monocomposantes comprenant le catalyseur et des composés aptes à réagir à chaud par hydrosilylation de motifs insaturés (e.g. POS SiH/POS Si-alcényle), tout en étant stables à température ambiante pendant de longues périodes (e.g. 1j à quelques mois).

Un autre objectif essentiel de l'invention est de proposer une composition silicone réticulable par hydrosilylation et comportant à titre de catalyseur un ou plusieurs complexes métalliques à base de carbènes hétérocycliques, cette composition n'étant pas le siège lors de la réticulation, de réactions secondaires d'isomérisation ou de colorations susceptibles de pertuber l'hydrosilylation.

Un autre objectif essentiel de l'invention est proposer de nouveaux complexes métalliques à base de carbènes hétérocycliques, utilisables à titre de catalyseurs d'hydrosilylation, ces derniers se devant d'être stables dans le milieu réactionnel, de manière à limiter la formation :
❖ de sous-produits indésirables résultant de réactions d'isomérisation de la double liaison oléfinique et/ou de réactions d'hydrogénation,
❖ et/ou de sous-produits à l'origine de colorations tout autant peu appréciés.

Un autre objectif essentiel de l'invention est proposer de nouveaux complexes métalliques à base de carbènes hétérocycliques, utilisables à titre de catalyseurs d'hydrosilylation, ces derniers se devant de produire dans le milieu réactionnel une activité catalytique sélective et de haut niveau qualitatif et quantitatif.

Un autre objectif essentiel de l'invention est proposer de nouveaux complexes métalliques à base de carbènes hétérocycliques, utilisables à titre de catalyseurs d'hydrosilylation, ces derniers se devant d'être très actifs à chaud et peu ou pas actifs à température ambiante, de façon à pouvoir formuler des compositions silicones monocomposantes, réticulables à chaud et stables au stockage pendant longtemps à température ambiante (durée de vie en pot), et ce, avec peu ou sans inhibiteur de réticulation.

Un autre objectif essentiel de l'invention est de proposer un procédé d'hydrosilylation et en particulier d'hydrosilylation de composés éthyléniquement et/ou acétyléniquement insaturés, en présence d'un catalyseur comprenant les nouveaux complexes métalliques susvisés.
Ces objectifs, parmi d'autres, sont atteints par la présente invention qui concerne en premier lieu, une composition silicone réticulable par hydrosilylation d'au moins un PolyOrganoSiloxane -A- (POS) porteur d'insaturation(s) éthylènique(s) et/ou acétylènique(s), à l'aide d'au moins un polyorganohydrogénosiloxane -B- , en présence d'un catalyseur -C- métallique et comprenant éventuellement au moins un inhibiteur -D- de la réaction d'hydrosilylation;
caractérisée en ce que le catalyseur -C- comporte au moins un composé sélectionné parmi les produits de formule (I) : 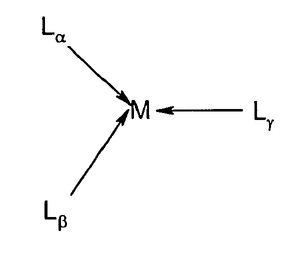 dans laquelle:
M représente un métal choisi parmi les métaux du groupe 8 du tableau périodique tel que publié dans Handbook of Chemistry and Physics, 65^{ème} édition, 1984-1985 ;
L_{γ} représente un carbène de formule (II) : 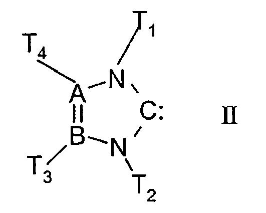 dans laquelle:
   ■ A et B représentent indépendamment C ou N, étant entendu que lorsque A représente N, alors T₄ ne représente rien et lorsque B représente N, alors T₃ ne représente rien ;
   ■ T₃ et T₄ représentent indépendamment un atome d'hydrogène ; un groupe alkyle ; cycloalkyle éventuellement substitué par alkyle ou alkoxy ; aryle éventuellement substitué par alkyle ou alkoxy; alcényle ; alcynyle; ou arylalkyle dans lequel la partie aryle est éventuellement substituée par alkyle ou alkoxy ; ou bien
   ■ T₃ et T₄ peuvent former ensemble et avec A et B quand ceux-ci représentent chacun un atome de carbone, un aryle ;
   ■ T₁ et T₂ représentent indépendamment un groupe alkyle ; un groupe alkyle éventuellement substitué par alkyle ; un groupe alkyle perfluoré ou éventuellement substitué par un groupe perfluoroalkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy; ou bien
   ■ T₁ et T₂ représentent indépendamment un radical monovalent de formule (V) suivante :

      V₁ - V₂ (V)

      dans laquelle :
      ● V₁ est un radical divalent hydrocarboné, de préférence un alkylène,
      ● V₂ est un radical monovalent choisi dans le groupe des substituants suivants:
         ◆ Alcoxy, -OR^{o} avec R^{o} correspondant à hydrogène, alkyle, aryle
         ◆ Amine, de préférence N(R^{o})₂ avec R^{o} correspondant à hydrogène, alkyle, aryle
   ■ T₁ et T₂ représentent indépendamment un radical monovalent de formule (W) suivante :

      W₁ - ω - W₂ (W)

      dans laquelle :
      - W₁ est un radical divalent hydrocarboné, de préférence un alkylène linéaire ou ramifié en C₁-C₁₀, éventuellement substitué,
      - ω représente :

         - R¹C = CR¹-

         avec R¹ correspondant à H ou alkyle
         ou

         -C≡C-
      - W₂ est un radical monovalent choisi dans le groupe des substituants suivants
      - R² = alkyle, H ;
         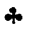 Si-alkyle ou Si-alcoxy, de préférence -Si(R³)₃ avec R³ = alkyle ;
         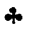 alcool, de préférence -C(R⁴)₂OH avec R⁴ = H ou alkyle ;
         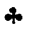 cétone, de préférence : 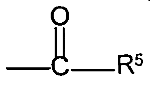 avec R⁵ = alkyle ;
         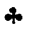 carboxy, de préférence 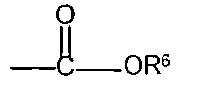 avec R⁶ = alkyle ;
         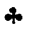 amide, de préférence 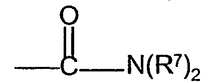 avec R⁷ = H, alkyle ;
         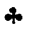 acyle, de préférence 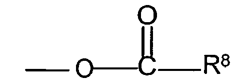 avec R⁸ = alkyle ;
      ou bien encore
   ■ les substituants T₁, T₂, T₃ et T₄ peuvent former deux à deux, lorsqu'ils sont situés sur deux sommets adjacents dans la formule (II), une chaîne hydrocarbonée saturée ou insaturée;
L_{α} et L_{β} sont des ligands identiques ou différents entre eux et
   → représentent chacun : 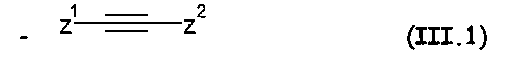 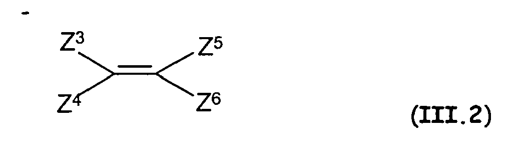 avec dans ces formules (III.1) et (III.2) :
      Z¹ , Z² , Z³, Z⁴ , Z⁵, Z⁶
      - représentant indépendamment chacun :
         a. l'hydrogène,
         b. un halogène,
         c. un cyano,
         d. un groupe hydrocarboné électroattracteur saturé ou non saturé, de préférence adjacent à la double ou triple liaison,
         e. deux Z^{1à6} vicinaux pouvant former ensemble un cycle électroattracteur avantageusement différent du carbène Lγ de formule (II) et comportant éventuellement des hétéroatomes (de préférence O, N, S );
      - ou les substituants Z¹ et Z² forment ensemble, dans (III.1), un radical monovalent alcényle comportant au moins un reste électroattracteur de préférence adjacent à la triple liaison;
      - ou bien encore Z³ à Z⁶ forment deux à deux, dans (II.2), un radical monovalent alcényle comportant au moins un reste électroattracteur de préférence adjacent à la double liaison;
   → ou forment ensemble le ligand Lδ de formule (IV) : 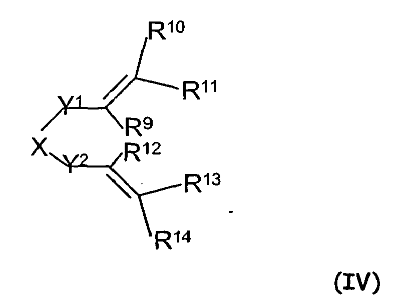 dans laquelle :
      ❖ Y₁ et Y₂ représentent indépendamment l'un de l'autre CRₐR_{b} ou SiR_{c}R_{d};
      ❖ X représente O, NRₑ ou CR_{f}R_{g} ;
      ❖ R¹⁰, R¹¹, R¹³ et R¹⁴, identiques ou différents, sont choisis parmi un atome d'hydrogène, un groupe alkyle et un groupe aryle éventuellement substitué par alkyle ;
      ❖ R⁹, R¹² , Rₐ, R_{b}, R_{c} et R_{d} sont indépendamment choisis parmi un atome d'hydrogène ; un groupe alkyle, acyle ; aryle éventuellement substitué par alkyle ; cycloalkyle éventuellement substitué par alkyle ; et arylalkyle dans lequel la partie aryle est éventuellement substitué par alkyle ;
      ❖ R_{c} et R_{d} sont indépendamment choisis parmi alkyle ; aryle éventuellement substitué par alkyle ; cycloalkyle éventuellement substitué par alkyle ; et arylalkyle dans lequel la partie aryle est éventuellement substituée par alkyle ; ou bien
      ❖ lorsque Y₁ et Y₂ représentent indépendamment SiR_{c}R_{d}, deux groupes R_{c} liés à deux atomes de silicium distincts forment ensemble une chaîne de formule : 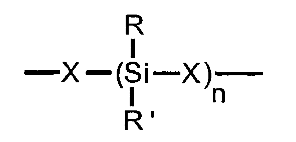 dans laquelle n est un entier de 1 à 3 ; X est tel que défini ci-dessus ; R et R', identiques ou différents, prennent l'une quelconque des significations données ci-dessus pour Rₑ, étant entendu que, lorsque n est 2 ou 3 un seul atome de silicium de ladite chaîne peut être substitué par un ou deux groupes alcényle ou alcynyle ;
         ou bien
      lorsque Y₁ et Y₂ représentent indépendamment SiP_{c}P_{d}, deux groupes R_{c} liés à des atomes de silicium distincts forment ensemble une chaîne hydrocarbonée saturée, les deux groupes R_{c} ensemble avec lesdits atomes de silicium et X formant un cycle de 6 à 10 chaînons ; ou bien
      ❖ lorsque Y₁ et Y₂ représentent indépendamment CRₐR_{b}, deux groupes Rₐ liés à des atomes de carbone distincts forment ensemble une chaîne hydrocarbonée saturée, les deux groupes Rₐ ensemble avec les atomes de carbone qui les portent et X forment un cycle de 6 à 10 chaînons ; et
      ❖ R_{f} et R_{g} représentent indépendamment l'un de l'autre un atome d'hydrogène ; un groupe alkyle; acyle; aryle éventuellement substitué par alkyle; cycloalkyle éventuellement substitué par alkyle; arylalkyle dans lequel la partie aryle est éventuellement substituée par alkyle ; un atome d'halogène ; un groupe alcényle ; un groupe alcynyle ;
      ou un groupe SiG₁G₂G₃ ou G₁, G₂ et G₃ sont indépendamment l'un de l'autre alkyle ; alkoxy ; aryle éventuellement substitué par alkyle ou alkoxy ; ou arylalkyle dans lequel la partie aryle est éventuellement substituée par alkyle ou alkoxy.

La présence des complexes métalliques/carbène hétérocycliques spécifiques dans les compositions selon l'invention, confèrent à celles-ci une grande stabilité en atmosphère ambiante dans des conditions normales de température, d'humidité et de pression. De telles compositions silicones peuvent être conservées sous forme monocomposante, à l'état non réticulé, en atmosphère ambiante, pendant de longues durées (par exemple de 1 à plusieurs mois). Ce résultat est d'autant plus avantageux et surprenant qu'avec certains catalyseurs métal/carbène hétérocyclique, on peut s'affranchir d'utiliser des inhibiteurs de réticulation ou à tout le moins en utiliser moins, ce qui est tout à fait bénéfique sur le plan économique et quant à la limitation des répercussions négatives sur la réticulation de l'élastomère et ses qualités finales.

Cette stabilité va de paire avec la faculté qu'ont les compositions selon l'invention de réticuler à chaud (par exemple à partir de 100°C) par hydrosilylation, en élastomères de bonne qualité, notamment sur le plan structurel et mécanique. En outre, la cinétique de la réaction est satisfaisante.

Par ailleurs, on n'observe pas de réactions secondaires d'isomérisation et peu de colorations indésirables après réticulation des compositions selon l'invention.

Ces compositions silicones monocomposantes qui ont une longue durée de vie à température ambiante, sont d'autant plus avantageuses que leur coût n'est pas prohibitif. Cet avantage est encore plus marqué quand elles ne comportent pas d'inhibiteur.

On complète ci-après la définition des complexes métalliques de formule (I) constituant le catalyseur -C-, composé essentiel de la composition selon l'invention.

Les métaux du groupe 8 que représente M dans la formule (I) sont par exemple le palladium, le platine ou le nickel à l'état d'oxydation 0. En pratiqué, M représente le platine à l'état d'oxydation 0.

Par alkyle, on désigne une chaîne hydrocarbonée saturée, linéaire ou ramifiée, éventuellement substituée (e.g. par un ou plusieurs alkyles), de préférence de 1 à 10 atomes de carbone, par exemple de 1 à 8 atomes de carbone, mieux encore de 1 à 7 atomes de carbone.
Des exemples de groupes alkyle sont notamment méthyle, éthyle, isopropyle, n-propyle, tert-butyle, isobutyle, n-butyle, n-pentyle, isoamyle et 1,1-diméthylpropyle. La partie alkyle du radical alcoxy est telle que définie ci-dessus.

Par cycloalkyle, on entend un radical hydrocarboné saturé mono- ou polycyclique, de préférence mono- ou bicyclique, présentant préférablement de 3 à 10 atomes de carbone, mieux encore de 3 à 8. Par radical hydrocarboné saturé polycyclique, on entend un radical présentant deux ou plusieurs noyaux cycliques rattachés les uns aux autres par des liaisons σ ou/et condensés deux à deux.
Des exemples de groupes cycloalkyle polycycliques sont adamantane et norbornane.
Des exemples de groupes cycloalkyle monocycliques sont cyclopropyle, cyclobutyle, cyclopentyle, cyclohexyle, cycloheptyle et cyclooctyle.

Par alkyle perfluoré, on désigne un alkyle comprenant au moins un groupe perfluoroalkyle, ayant de préférence pour formule :

-CH₂)ₚ-C_{q}F_{2q+1}

dans laquelle p représente 0, 1, 2, 3 ou 4 ; q est un entier de 1 à 10 ; et C_{q}F_{2q+1} est linéaire ou ramifié. Des exemples préférés de ce radical sont :

-CH₂)₂-(CF₂)₅-F₃ et -(CF₂)₇-CF₃.

L'expression aryle désigne un groupe hydrocarboné aromatique, ayant de 6 à 18 atomes de carbone, monocyclique ou polycyclique et de préférence monocyclique ou bicyclique. Il doit être entendu que, dans le cadre de l'invention, par radical aromatique polycyclique, on entend un radical présentant deux ou plusieurs noyaux aromatiques, condensés (orthocondensés ou ortho et péricondensés) les uns aux autres, c'est-à-dire présentant, deux à deux, au moins deux carbones en commun. Ledit groupe hydrocarboné aromatique ("aryle") est éventuellement substitué par exemple par un ou plusieurs alkyles en C₁-C₃, un ou plusieurs radicaux hydrocarbonés halogénés (e.g. CF₃), un ou plusieurs alcoxy (e.g. CH₃O) ou un ou plusieurs radicaux hydrocarbonés comprenant un ou plusieurs motifs cétone (e.g. CH₃CO-).
A titre d'exemple d'aryle, on peut mentionner les radicaux phényle, naphtyle, anthryle et phénanthryle.

L'expression arylalkyle désigne un groupe alkyle tel que défini ci-dessus, substitué par un ou plusieurs groupes aryle sur sa chaîne hydrocarbonée, le groupe aryle étant tel que défini ci-dessus. Des exemples en sont benzyle et triphénylméthyle.

Par acyle, on entend un groupe R°-CO- où R° représente un alkyle tel que défini ci-dessus ; ou bien un groupe Ar-CO- où Ar représente un groupe aryle tel que défini ci-dessus, ou bien un arylalkyle dans lequel "aryle" et "alkyle" sont tels que définis ci-dessus et dans lequel la partie aryle est éventuellement substituée e.g. par un alkyle.

Par alcényle, on entend une chaîne hydrocarbonée insaturée, linéaire ou ramifiée, substituée ou non, présentant au moins une double liaison oléfinique, et plus préférablement une seule double liaison. De préférence, le groupe alcényle présente de 2 à 8 atomes de carbone, mieux encore de 2 à 6. Cette chaîne hydrocarbonée comprend éventuellement au moins un hétéroatome tel que O,N,S.
Des exemples préférés de groupes alcényle sont les groupes allyle et homoallyle.

Par alcynyle, on entend selon l'invention, une chaîne hydrocarbonée insaturée, linéaire ou ramifiée, substituée ou non, présentant au moins une triple liaison acétylénique, et plus préférablement une seule triple liaison. De préférence, le groupe alcynyle présente de 2 à 8 atomes de carbone, mieux encore de 2 à 6 atomes de carbone. A titre d'exemple, on peut citer le groupe acétylényle, ainsi que le groupe propargyle. Cette chaîne hydrocarbonée comprend éventuellement au moins un hétéroatome tel que O,N,S.

L'expression "ne représente rien" signifie que les substituants -T₃, respectivement -T₄, sont inexistants. En effet, dans la formule (II), l'atome d'azote est trivalent, de telle sorte que lorsque A ou B représente N, l'atome d'azote ne peut présenter de substituant supplémentaire.

De préférence, dans les ligands carbène de formule (II) :
► T₃ et T₄ représentent un atome d'hydrogène ou forment ensemble un phényle,
► et/ou T₁ et T₂, identiques ou différents, représentent (C₁-C₈)alkyle ou (C₃-C₈)cycloalkyle, de préférence dans le groupe de radicaux comprenant : méthyle, n-propyle, n-pentyle, néo-pentyle (-CH₂-C(CH₃)₃), cyclopentyle, cyclohexyle, adamantyle, allyle (-CH₂-CH=CH₂), méthallyle (-CH₂-C(CH₃)=CH₂), propargyle, homopropargyle (-(CH₂)₂-C≡CH), ou 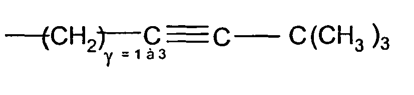 ou 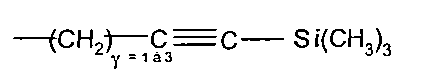 ou bien encore : -(CH₂)_{γ=1 à 4}-amine (par exemple N(CH₃)₂)
   ou -(CH₂)_{γ=1 à 4}-alcoxy (par exemple O(CH₃)₂ );
► et/ou A et B représentent tous deux un atome de carbone.

Selon une variante, les carbènes de formule (II) correspndant au ligand L_{γ} dans le catalyseur -C-, peuvent présenter au moins deux noyaux condensés, c'est-à-dire que deux substituants au moins parmi T₁, T₂, T₃ et T₄, situés sur deux sommets adjacents, forment ensemble une chaîne hydrocarbonée saturée ou insaturée, présentant de préférence de 3 à 6 atomes de carbone. Par chaîne hydrocarbonée saturée ou insaturée, on entend une chaîne hydrocarbonée linéaire ou ramifiée pouvant présenter ou non une ou plusieurs insaturations de type double liaison oléfinique ou triple liaison acétylénique.
Lorsque les carbènes (II) présentent deux noyaux condensés, ils répondent donc à l'une des formules suivantes, dans lesquelles (alk) représente une chaîne hydrocarbonée saturée ou insaturée :

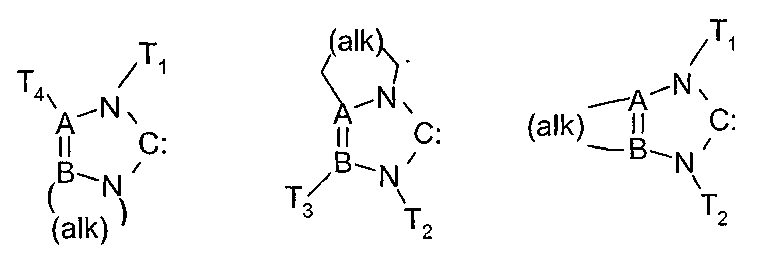

Les ligands Lα et Lβ du catalyseur -C- de formule (I), appartenant à la composition selon l'invention, peuvent représenter indépendamment un alcynyle de formule (III.1) ou un alcényle de formule (III.2) substitué par des radicaux Z¹ à Z⁶ porteurs d'au moins un motif électroattracteur , actif vis à vis de l'insaturation n de Lα et Lβ, pour promouvoir le ligandage avec le métal M du complexe.

Avantageusement, dans les formules (III.1) et (III.2), les restes électroattracteurs sont choisis dans le groupe comprenant : 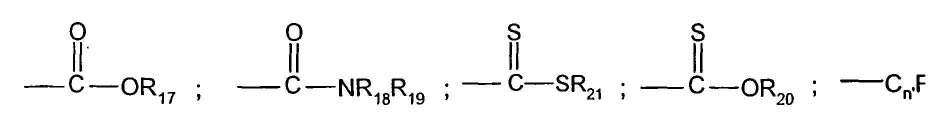 dans laquelle :
R₁₇, R₁₈, R₁₉, R₂₀ est un alkyle, un alcényle, un alcynyle ou un trialkylsilyle substitué ou non, et n' compris entre 1 et 50.
A titre d'exemples de radicaux Z¹ à Z⁶, on peut citer :
❖ ceux sélectionnés dans le groupe comprenant: -CN, -COOCH₃, -COOCH₂CH₃, -CONC₁₂H₂₅,
❖ et dans les cas où les substituants Z¹ et Z² forment deux à deux et avec la triple liaison, dans (III.1), un cycle Cy1 et où Z³ à Z⁶ forment deux à deux, avec ou sans la double liaison, dans (III.2), un cycle Cy2, ces cycles Cy1 & Cy2 sont indépendamment et de préférence, choisis dans le groupe comprenant les cycles suivants :

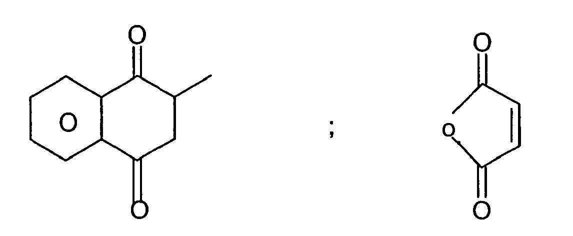

Lorsque Lα & Lβ forment ensemble un ligand Lδ de formule (IV), ce dernier est de préférence du type de ceux dans lesquels Y₁ et Y₂ représentent, soit tous les deux CRₐR_{b}, soit tous les deux SiR_{c}R_{d}, de telle sorte que lesdits complexes ont, soit pour formule (IV.1), soit pour formule (IV.2) : 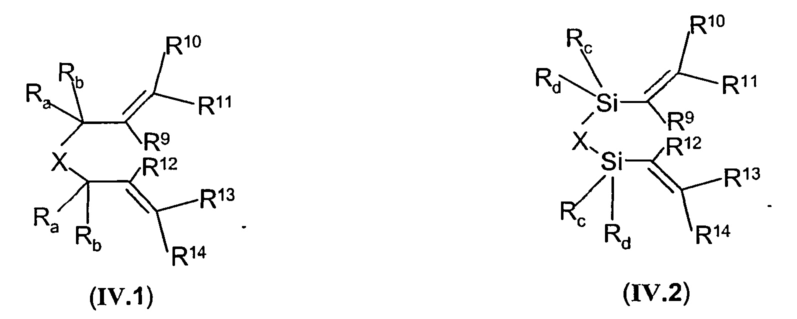 où
les deux Rₐ, les deux R_{b}, les deux R_{c} et les deux R_{d}. sont identiques entre eux, et R⁹ = R¹² ; R¹⁰ = R¹⁴ ; et R¹¹ = R¹³.

Selon une variante, les deux R_{c} dans (IV.2) forment ensemble :
(a) soit une chaîne 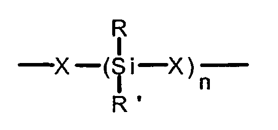 dans laquelle n est un entier de 1 à 3 ; X est tel que défini ci-dessus; et R et R, identiques ou différents, prennent l'une quelconque des significations données ci-dessus pour R_{d}, étant entendu que, lorsque n est 2 ou 3, un seul atome de silicium de ladite chaîne peut être substitué par un ou deux groupes alcényle ou alcynyle ;
(b) soit une chaîne hydrocarbonée saturée, de telle sorte que les deux substituants R_{c}, ensemble avec les deux atomes de silicium qui les portent et X, forment un cycle de 6 à 10 chaînons, de préférence de 6 à 8 chaînons.

Lorsque les deux R_{c} forment la chaîne (a) dans (IV.2), on préfère que n vaille 1 ou 2 (mieux encore n vaut 1) et que R = R_{d}, les deux groupes R_{d} portés par les deux atomes de silicium étant identiques. En ce cas, R_{d} représente préférablement alkyle, par exemple méthyle. Mieux encore, dans ces composés, R' représente -CR₁₂=CR₁₃R₁₄; R₁₃ = R₁₁; R₁₀ = R_{14;} et R₁₂ = R₉.
Dans ce cas, on préfère que X représente O dans (IV.2). Le ligand Lδ a alors pour formule :

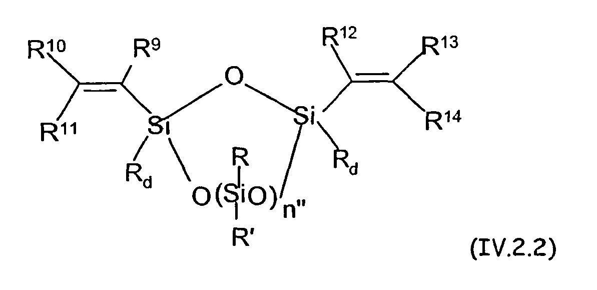

Parmi ces composés, on préfère que les deux R_{d} soient identiques et avantageusement représente alkyle (par exemple méthyle).

De façon préférée, n vaut 1 ou 2 et R = R_{d}, étant entendu que lorsque n vaut 2, un seul atome de silicium de la chaîne O-(SiRR'-O)ₙ- peut être substitué par un ou deux groupes alcényle ou alcynyle. Mieux encore, R' = -CR₁₂=CR₁₃R₁₄ et R₁₃ = R₁₁; R₁₀ = R₁₄ ; et R₁₂ = R₉.

Lorsque les deux R_{c} forment ensemble avec les deux atomes de silicium et le groupe X, la chaîne (b), on préfère que les deux groupes R_{c}, , soient un cycle à 8 chaînons. En ce cas, on préfère que les deux R_{d} soient identiques. Le ligand Lδ a alors pour formule: 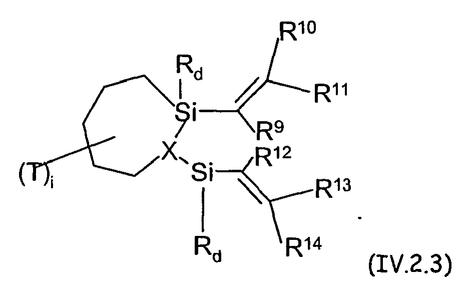 où T représente alkyle , i est un nombre entier compris entre 0 et 5, T étant situé sur un ou plusieurs des sommets 1, 2, 3, 4 et 5 de la formule ci-dessus.

De la même façon, lorsque Y₁ et Y₂ représentent CRₐR_{b} dans (IV.1), les deux groupes Rₐ liés à des atomes de carbone distincts peuvent former ensemble une chaîne hydrocarbonée saturée (c), de telle sorte que les deux groupes Rₐ ensemble avec les carbones qui les portent et X forment un cycle de 6 à 10 chaînons. De préférence, le cycle formé est un cycle à 8 chaînons, auquel cas le ligand Lδ a alors pour formule: 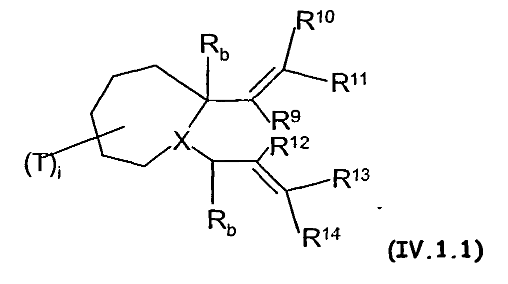 où T représente alkyle ; i est un nombre entier compris entre 0 et 5, T étant situé sur un ou plusieurs des sommets 1, 2, 3, 4 et 5 de la formule ci-dessus.

Lorsque R_{f} et/ou R₉ représente SiG₁G₂G₃, on préfère que R_{f} et/ou R₉ soit trialkylsilyle, par exemple SiG₁G₂G₃ où G₁ = G₂ = G₃ = alkyle.

Des sous-groupes des ligands Lδ des complexes métalliques (catalyseur -C-) entrant dans la composition selon l' invention, sont constitués des complexes pour lesquels :
- X = O ; Y₁ et Y₂ représentent indépendamment SiR_{c}R_{d} ; ou
- X = NRₑ ; Y₁ et Y₂ représentent indépendamment CRₐR_{b} ; ou
- X = NRₑ ; Y₁ et Y₂ représentent indépendamment 5iR_{c}R_{d} ; ou
- X = CR_{f}R_{g} ; Y₁ et Y₂ représentent indépendamment CRₐR_{b} ; ou
- X = CR_{f}R_{g} ; Y₁ et Y₂ représentent indépendamment SiR_{c}R_{d}.

Parmi ces ligands Lδ de formule (IV), on préfère ceux pour lesquels :
- lorsque X représente O, Y₁ et Y₂ représentent indépendamment SiR_{c}R_{d} ; ou
- lorsque X représente NRₑ, Y₁ et Y₂ représentent indépendamment CRₐR_{b} ; ou
- lorsque X représente CR_{f}R₉, Y₁ et Y₂ représentent indépendamment CRₐR_{b}.

En pratique, X représente O et Y₁ et Y₂ représentent indépendamment SiR_{c}R_{d} dans le ligand Lδ de formule (IV).

Dans le cadre de l'invention, l'expression "représentent indépendamment" signifie que les substituants désignés sont soit identiques soit différents.

Par exemple, R₁₀, R₁₁, R₁₃ et R₁₄ sont des atomes d'hydrogène dans les ligands Lδ de formule (IV).

Des significations préférées de R₉ et R₁₂ sont notamment un atome d'hydrogène ; un groupe alkyle ; aryle éventuellement substitué par alkyle ; et cycloalkyle éventuellement substitué par alkyle. Parmi ces significations préférées, il est particulièrement avantageux que R₉ et R₁₂, identiques, représentent un atome d'hydrogène ; (C₃-C₈)cycloalkyle ou (C₁-C₈)alkyle.

Par exemple, le ligand dioléfinique Lδ de formule (IV) est symétrique, c'est-à-dire que R₁₀ = R₁₄ ; R₁₁ = R₁₃ R₉ = R₁₂ et les deux groupes Y₁, Y₂ sont soit strictement identiques entre eux, soit Y₁ = CRₐR_{b} et Y₂ = CRₐR_{b} où les deux Rₐ forment ensemble une chaîne symétrique, soit encore Y₁ = SiR_{c}R_{d} et Y₂ = SiR_{c}R_{d} où les deux R_{c} forment ensemble une chaîne symétrique.

Concernant le catalyseur -C- de la composition selon l'invention, il convient de citer un premier groupe particulièrement préféré de complexes métalliques de formule (I.1) suivante : 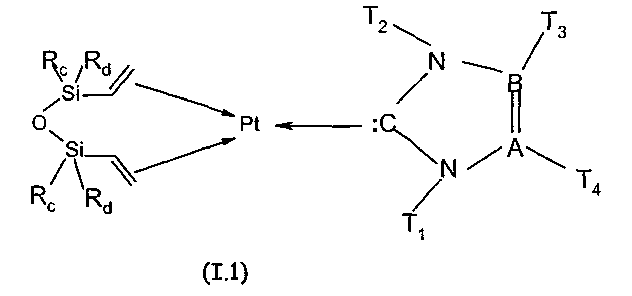 dans laquelle :
T₁ et T₂ sont identiques et sont tels que définis ci-dessus ;
T₃ et T₄ sont tels que définis ci-dessus ;
R_{c} et R_{d} sont tels que définis ci-dessus.

Un deuxième groupe particulièrement préféré de catalyseurs -C- de la composition selon l'invention comprend les complexes métalliques de formule (I.2) suivante : 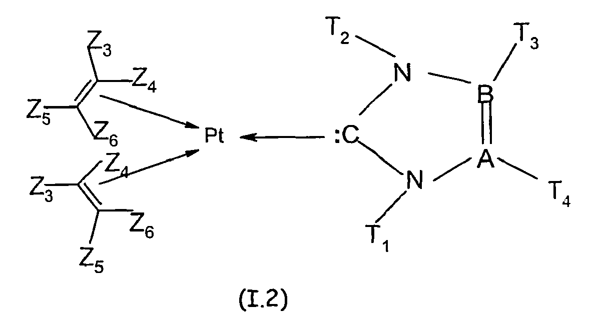 dans laquelle :
T₁ et T₂ sont identiques et sont tels que définis ci-dessus ;
T₃ et T₄ sont tels que définis ci-dessus ;
R_{c} et R_{d} sont tels que définis ci-dessus.

Un troisième groupe particulièrement préféré de catalyseurs -C- de la composition selon l'invention comprend les complexes métalliques de formule (I.3) suivante : 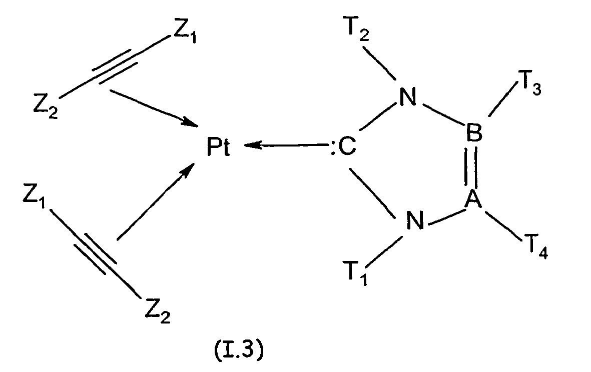 dans laquelle :
T₁ et T₂ sont identiques et sont tels que définis ci-dessus ;
T₃ et T₄ sont tels que définis ci-dessus ;
R_{c} et R_{d} sont tels que définis ci-dessus.
Outre le catalyseur -C- la composition selon l'invention comporte les deux espèces polyorganosiloxaniques réactives par polyaddition, à savoir le POS -A- et le POS -B-. Ces derniers sont choisis parmi les POS constitués de motifs siloxyles de formule générale : 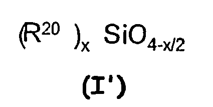 et/ou de motifs siloxyles de formule : 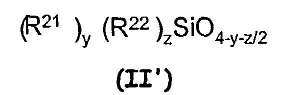 formules dans lesquelles les divers symboles ont la signification suivante :
- les symboles R²⁰, R²² identiques ou différents, représentent chacun un groupement de nature hydrocarbonée non hydrolysable, ce radical pouvant être :
   ★ un radical alkyle, halogénoalkyle ayant de 1 à 5 atomes de carbone et comportant de 1 à 6 atomes de chlore et/ou de fluor,
   ★ des radicaux cycloalkyles et halogénocycloalkyles ayant de 3 à 8 atomes de carbone et contenant de 1 à 4 atomes de chlore et/ou de fluor,
   ★ des radicaux aryles, alkylaryles et halogénoaryles ayant de 6 à 8 atomes de carbone et contenant de 1 à 4 atomes de chlore et/ou de fluor,
   ★ des radicaux cyanoalkyles ayant de 3 à 4 atomes de carbone ;
- les symboles R²¹, identiques ou différents, représentent chacun un atome d'hydrogène, un groupement alkényle en C₂-C₆, un groupement hydroxyle, un atome hydrolysable, un groupement hydrolysable ;
- x = un nombre entier égal à 0, 1, 2 ou 3 ;
- y = un nombre entier égal à 0, 1, 2 ou 3 ;
- z = un nombre entier égal à 0, 1, ou 2 ;
- la somme y+z est comprise entre 1 et 3;
avec la condition selon laquelle le POS -A- Si-alcényle comprend au moins un motif R²¹= alcényle par molécule et le POS -B- Si-H comprend au moins un motif R²¹ = hydrogène par molécule;
de préférence
R²⁰ = méthyle ; éthyle ; propyle ; isopropyle ; butyle ; isobutyle ; n-pentyle ; t-butyle ; chlorométhyle ; dichlorométhyle ; α-chloroéthyle ; α,β-dichloroéthyle ; fluorométhyle ; difluorométhyle ; α,β-difluoroéthyle ; trifluoro-3,3,3 propyle ; trifluoro cyclopropyle ; trifluoro-4,4,4 butyle ; hexafluoro-3,3,4,4,5,5 pentyle ; β-cyanoéthyle ; γ-cyanopropyle ; phényle : p-chlorophényle ; m-chlorophényle ; dichloro-3,5 phényle ; trichlorophényle ; tétrachlorophényle ; o-, pou m-tolyle ; α,α,α-trifluorotolyle ; xylyles comme diméthyl-2,3 phényle, diméthyl-3,4 phényle et plus préférentiellement encore méthyle, phényle, ces radicaux pouvant être éventuellement halogénés ou bien encore des radicaux cyanoalkyle;
R²¹ = hydrogène ou vinyle.

Ces POS -A- & -B- sont par exemple respectivement un polyorganovinylsiloxane et un polyorganohydrogénosiloxane . Les substituants organiques différents des groupements réactifs vinyles et de l'hydrogène, sont par exemple des méthyles ou des cyclohexyles. Les hydrogènes et les vinyles sont portés par des motifs siloxyles M = [R₃SiO- ] et/ou D = [-(R)₂SiO- ] et/ou
T = [-(R)SiO- ]. Ces motifs M, D hydrogénés ou vinylés comportent chacun un ou plusieurs H ou Vinyle, de préférence un seul.
Le nombre motifs SiH ou SiVi par molécule est supérieur ou égal à 1 et de préférence au moins égal à 10 et, mieux, compris entre 10 et 100.
Cela peut représenter de 0,01% à 10 % ( de préférence 0,1 à 2 % ) de vinyle en poids pour le POS -A- et de 0,001 % à 5 % ( de préférence 0,05 à 2 % ) de d'hydrogène en poids pour le POS -B-.

Des polymères appropriés sont les polyméthylhydrogénosiloxanes à extrémités, -Si(CH₃)₃ et les polydiméthylsiloxanes à extrémités -Si(CH₃)₂H, les copolymères méthylhydrogénodiméthylsiloxanes à extrémités -Si(CH₃)₂H, les copolymères méthylhydrogénométhyloctylsiloxanes, et les polymères méthylhydrogénocyclosi loxanes

En général, les POS -A- & -B- utilisables dans la réaction ont une masse moléculaire moyenne comprise entre 1.10² et 1.10⁶ (g/mol).

Pour le POS -A-, cela englobe notamment, en termes de viscosité dynamique à 25°C, des gammes :
o de POS vulcanisables à chaud (EVC) par polyaddition, ayant une viscosité au moins égale à 1.10⁵ mPa.s, de préférence comprise entre 1.10⁶ et 1.10⁷ mPa.s, et même davantage, pour les
o et de POS vulcanisables à chaud, par polyaddition de type élastomères silicones liquides(LSR), ayant une viscosité de préférence comprise 1.10⁵ et 5.10⁵ mPa.s.

Suivant une modalité préférée de l'invention, les compositions silicones concernées sont des POS vulcanisables à chaud (EVC) par polyaddition et dans lesquelles les POS -A- peuvent avoir en pratique une viscosité à 25°C de e.g. 2.10⁶ mPa.s et les POS -B- de 10 à 5000 mPa.s (e.g. 300 mPa.s).

Dans ces exemples, la viscosité est mesurée à l'aide d'un viscosimètre BROOKFIELD selon les indications de la norme AFNOR NFT 76 106 de mai 82.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

La composition selon l'invention peut également contenir un certain nombre d'ingrédients classiques, outre les POS -A- & -B- et le catalyseur -C-, dont notamment, au moins un inhibiteur -D- de réticulation, apte à freiner la réaction de polyaddition et à permettre la conservation de la composition monocomposante ABCD, dans un état non entièrement réticulé.
Ainsi, l'invention concerne des compositions silicones comportant au moins un inhibiteur -b- et dans lesquelles le catalyseur -C- est choisi parmi les complexes métalliques
- de formule (I.1) suivante : 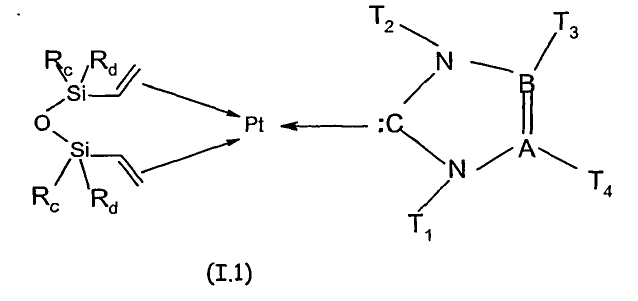
- de formule (I.2) suivante : 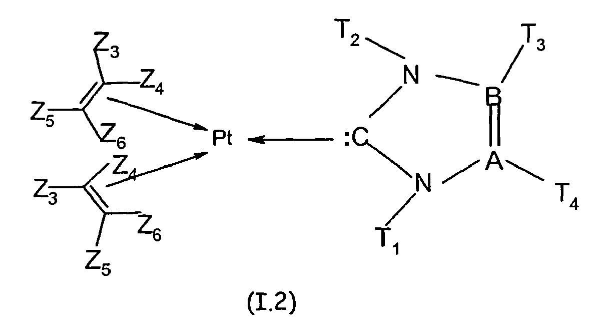 où :
   T₁ et T₂ sont identiques et sont tels que définis ci-dessus ;
   T₃ et T₄ sont tels que définis ci-dessus ;
   R_{c} et R_{d} sont tels que définis ci-dessus ;
   Z¹ à Z⁶ sont exempts de reste(s) électroattracteur(s) ;
- et/ou de formule (I.3) suivante : 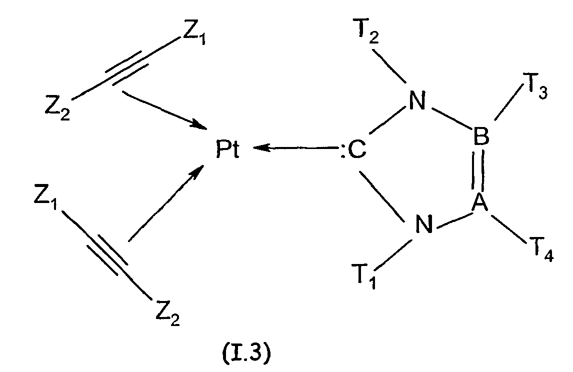 dans laquelle :
   T₁ et T₂ sont identiques et sont tels que définis ci-dessus ;
   T₃ et T₄ sont tels que définis ci-dessus ;
   R_{c} et R_{d} sont tels que définis ci-dessus ;
   Z¹ et Z² sont exempts de reste(s) électroattracteur(s).
Ces compositions ont de longues durées de conservation ("pot life").

Il est à noter que pour certains catalyseurs -C-, notamment ceux comprenant un carbène (II) et au moins un (de préférence deux) ligands Lα & Lβ de formule (III.1) ou (III.2), il n'est pas nécessaire d'utiliser un inhibiteur. Ainsi, l'invention vise également des compositions silicones exemptes d' inhibiteur - D- et dans lesquelles le catalyseur -C- est choisi parmi les complexes métalliques :
- de formule (I.2) suivante : 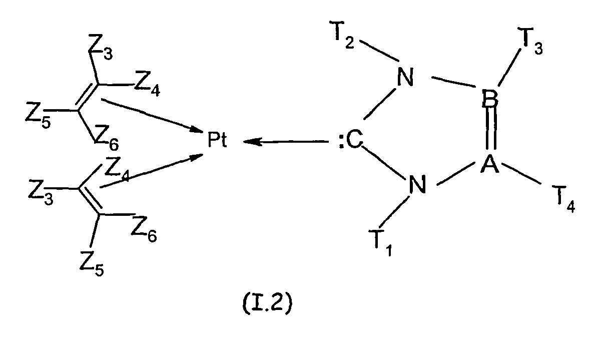 où :
   T₁ et T₂ sont identiques et sont tels que définis ci-dessus ;
   T₃ et T₄ sont tels que définis ci-dessus ;
   R_{c} et R_{d} sont tels que définis ci-dessus ;
   au moins l'un des substituants Z¹ à Z⁶ (de préférence chaque substituant) comprend au moins un reste électroattracteur ;
- et/ou de formule (I.3) suivante : 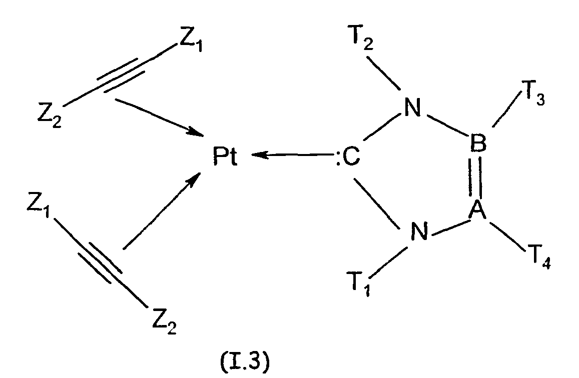 dans laquelle :
   T₁ et T₂ sont identiques et sont tels que définis ci-dessus ;
   T₃ et T₄ sont tels que définis ci-dessus :
   R_{c} et R_{d} sont tels que définis ci-dessus ;
   Z¹ et Z² sont exempts de reste(s) électroattracteur(s).
Ces compositions sans inhibiteur, sont dotées -de manière tout à fait avantageuse et inattendue- de longues durées de conservation ("pot life") en atmosphère ambiante . La réticulation n'intervient qu'à chaud. Cet avantage est capital sur le plan économique et sur le plan de la commodité de d'utilisation et de stockage.

Avantageusement, les inhibiteurs -D- (s'ils sont mis en oeuvre) sont sélectionnés parmi :
- les polyorganosiloxanes, avantageusement cycliques, substitués par au moins un alcényle, le tétraméthylvinyltétrasiloxane étant particulièrement préféré,
- les amides insaturés,
- les maléates alkylés, alcénylés ou alcynylés, le diallylmaléate étant particulièrement préféré,
- les alcools acétyléniques,
- les acétylènes dicarboxylates alkylés, alcénylés ou alcynylés,
- et leurs asssociations.
S'agissant des alcools acétyléniques (Cf. FR-B-1 528 464 **et** FR-A-2 372 874), il peut être indiqué qu'ils font partie des bloqueurs thermiques de réaction d'hydrosilylation préférés, et qu'ils ont pour formule :

R^{x} - (R^{y}) C (OH) - C ≡ CH

formule dans laquelle :
R^{x} est un radical alkyle linéaire ou ramifié, ou un radical phényle ;
R^{y} est H ou un radical alkyle linéaire ou ramifié, ou un radical phényle ;
les radicaux R^{x}, R^{y} et l'atome de carbone situé en α de la triple liaison pouvant éventuellement former un cycle ;
le nombre total d'atomes de carbone contenu dans R^{x} et R^{y} étant d'au moins 5, de préférence de 9 à 20.
Lesdits alcools sont, de préférence, choisis parmi ceux présentant un point d'ébullition supérieur à 250°C. On peut citer à titre d'exemples :
- l'éthynyl-1-cyclohexanol 1;
- le méthyl-3 dodécyne-1 ol-3 ;
- le triméthyl-3,7,11 dodécyne-1 ol-3 ;
- le diphényl-1,1 propyne-2 ol-1;
- l'éthyl-3 éthyl-6 nonyne-1 ol-3 ;
- le méthyl-3 pentadécyne-1 ol-3.
Ces alcools α-acétyléniques sont des produits du commerce.

Un tel ralentisseur (D) est présent à raison de 3 000 ppm au maximum, de préférence à raison de 100 à 2000 ppm par rapport au poids total des organopolysiloxanes (A) et (B).

Comme familles usuelles d'additifs fonctionnels usuels, susceptibles d'être mis en oeuvre dans les compositions silicones selon l'invention, on peut citer :
■ les charges,
■ les huiles POS hydroxylées utiles comme compatibilisant,
■ les promoteurs d'adhérence,
■ les modulateurs d'adhérence,
■ les pigments,
■ les additifs de tenue thermique, de tenue aux huiles, au feu (par exemple les oxydes métalliques),
■ etc.

Les charges éventuellement prévues sont de préférence minérales. Elles peuvent être constituées par des produits choisis parmi les matières siliceuses (ou non).

S'agissant des matières siliceuses, elles peuvent jouer le rôle de charge renforçante ou semi-renforçante.

Les charges siliceuses renforçantes sont choisies parmi les silices colloïdales, les poudres de silice de combustion et de précipitation ou leur mélange.

Ces poudres présentent une taille moyenne de particule généralement inférieure à 0,1 µm et une surface spécifique BET supérieure à 50 m²/g, de préférence comprise entre 150 et 350 m²/g.

Les charges siliceuses semi-renforçantes telles que des terres de diatomées ou du quartz broyé, peuvent être également employées.

En ce qui concerne les matières minérales non siliceuses, elles peuvent intervenir comme charge minérale semi-renforçante ou de bourrage.
Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte.

Ces charges ont une granulométrie généralement comprise entre 0,001 et 300 µm et une surface BET inférieure à 100 m²/g.

De façon pratique mais non limitative, les charges employées peuvent être un mélange de quartz et de silice.

Les charges peuvent être traitées par tout produit approprié.

Sur le plan pondéral, on préfère mettre en oeuvre une quantité de charge comprise entre 20 et 50, de préférence entre 25 et 35 % en poids par rapport à l'ensemble des constituants de la composition.

Plus généralement, sur le plan quantitatif, les compositions selon l'invention renvoient à des proportions standards dans le domaine technique considéré, sachant que l'on doit tenir compte également de l'application visée.

Selon un autre de ses aspects, la présente invention concerne, à titre de produits nouveaux, des complexes de formule (I), utiles notamment comme catalyseurs -C- et dans lesquels le carbène de formule (II) est tel que :
- T₃ et T₄ peuvent former ensemble et avec A et B quand ceux-ci représentent chacun un atome de carbone, un aryle tel que défini ci-dessus, de préférence un phényle ;
- et/ou T₁ et T₂ représentent indépendamment un radical monovalent de formule (V) suivante :

   - V₁ - V₂ (V)

   dans laquelle :
   • V₁ est un radical divalent hydrocarboné, de préférence un alkylène linéaire ou ramifié en C₁-C₁₀, éventuellement substitué,
   • V₂ est un radical monovalent choisi dans le groupe des substituants suivants :
      ◆ alcoxy, -OR^{v} avec R^{v} correspondant à hydrogène, alkyle, aryle
      ◆ amine, de préférence N(R^{v})₂ avec R^{v} correspondant à hydrogène, alkyle, aryle
   - ou bien T₁ et T₂ représentent indépendamment un radical monovalent de formule (W) suivante :

      - W₁ - ω - W₂ (W)

      dans laquelle :
      - W₁ est un radical divalent hydrocarboné, de préférence un alkylène linéaire ou ramifié en C₁-C₁₀, éventuellement substitué,
      - ω représente :

         - R^{α}*C*= *C*R^{α}*-*

         avec R^{α} correspondant à H ou alkyle
         ou

         -*C*≡*C*-
      - W₂ est un radical monovalent choisi dans le groupe des substituants suivants :
         ◆ R^{β}= alkyle, H ;
         ◆ Si-alkyle, ou Si-alcényle ou Si-alcynyle, de préférence -Si(alkyle)₃ ;
         ◆ alcool, de préférence -*C*(R^{ε})₂OH avec R^{ε} = H oL, alkyle ;
         ◆ cétone, de préférence 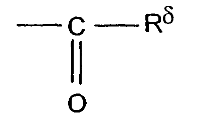 avec R^{δ}) = alkyle ; alcényle, alcynyle ;
         ◆ carboxy, de préférence 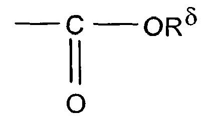 avec R^{δ} = alkyle ; alcényle, alcynyle ;
         ◆ amide, de préférence 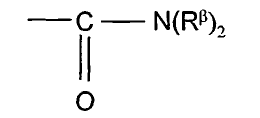 avec R^{β} = H, alkyle ; alcényle, alcynyle ;
         ◆ acyle, de préférence 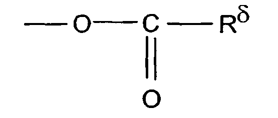 avec R^{δ} = alkyle ; alcényle, alcynyle ;
   T₁ et T₂ correspondant de préférence indépendamment à un radical W du type 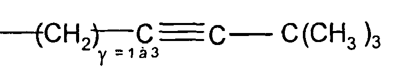 ou 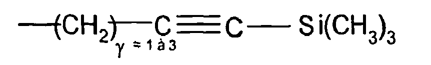 ou bien encore à l'un des motifs suivants méthyle, isopropyle, tert-butyle, n-pentyle, néo-pentyle, cyclopentyle, cyclohexyle, adamantyle, allyle, méthallyle, propargyle ou homopropargyle,
- ou bien encore_les substituants T₁, T₂, T₃ et T₄ peuvent former deux à deux, lorsqu'ils sont situés sur deux sommets adjacents dans la formule (II), une chaîne hydrocarbonée saturée ou insaturée.
L'invention a également pour objet d'autres nouveaux complexes métalliques de formule (I) dans laquelle :
➢ Lγ est tel que défini supra,
➢ Lα et Lβ correspondent indépendamment aux composés de formules (II), (III.1) ou (III.2) telles que définies supra.

A titre d'exemples de ces nouveaux catalyseurs, on peut citer:
- Ceux de formule (I.2) suivante : 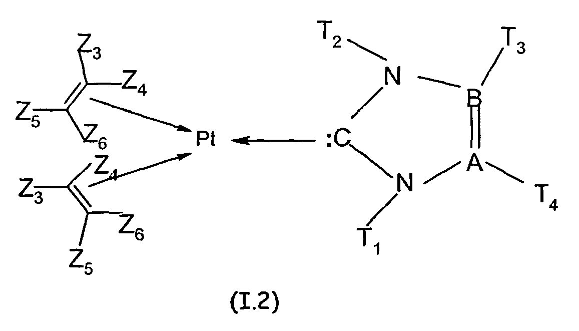 dans laquelle :
   T₁ et T₂ sont identiques et sont tels que définis ci-dessus ;
   T₃ et T₄ sont tels que définis ci-dessus ;
   R_{c} et R_{d} sont tels que définis ci-dessus.
- ou ceux de formule (I.3) suivante : 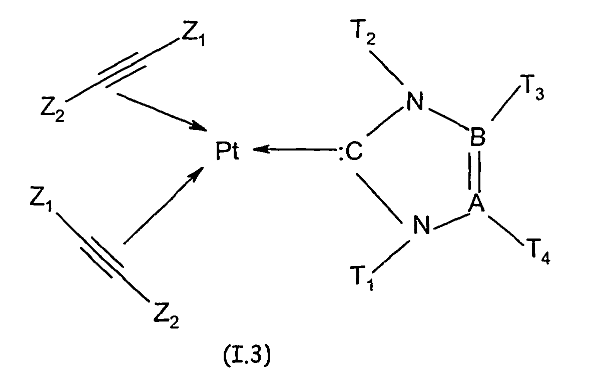 dans laquelle :
   T₁ et T₂ sont identiques et sont tels que définis ci-dessus ;
   T₃ et T₄ sont tels que définis ci-dessus ;
   R_{c} et R_{d} sont tels que définis ci-dessus;
Il est à noter que dans ces formules (I.1), (I.2), mais également (I.3), le platine peut être remplacé par tout métal M, tel que défini ci-dessus.

L'invention couvre, en outre, toute composition catalytique comprenant, à titre de matière active, un ou plusieurs complexes métalliques (I) tels que définis ci-dessus et comportant au moins un ligand Lα ou Lβ (mieux encore deux) de formule (III.1) ou (III.2).
De tels catalyseurs (notamment d'hydrosilylation) ont ceci de particulier qu'ils peuvent se former in situ, dans des compositions silicones du type de celles selon l'invention, pour autant qu'elles comportent des ligands Lα & Lβ, de formule (III.1)
ou (III.2), par exemple à titre d'inhibiteur -D-. Ce ou ces ligands Lα & Lβ, de formule (III.1) ou (III.2) sont aptes à déplacer les ligands intiaux L du catalyseur - C-. On est ici en présence de catalyseurs latents. La présente invention englobe évidemment ce cas de figure.

Un autre objet de l'invention est constitué par un procédé d'hydrosilylation d'oléfines ou de dérivés acétyléniques (par exemple hydrosilylation d'un ou plusieurs POS -A- à l'aide d'un ou plusieurs POS -B-), caractérisé en ce qu'il consiste à mettre en oeuvre la composition silicone telle que définie ci-dessus et/ou la composition catalytique également décrite supra.

Selon une variante avantageuse dans laquelle on a recours à au moins un catalyseur latent tel décrit ci-dessus, on met en oeuvre une composition silicone selon l'invention, telle que présentée ci-avant et comprenant au moins un inhibiteur - D- permettant la formation in situ d'au moins un complexe métallique comportant au moins un ligand Lα ou Lβ, de formule (III.1) ou (III.2).

De façon surprenante, lorsqu'on réalise l'hydrosilylation utilisant comme catalyseurs les complexes métalliques préparés par le procédé selon l'invention, la formation de ces sous-produits est fortement limitée. Plus particulièrement, on constate une forte réduction du taux d'isomères formés, ainsi qu'une faible coloration, résultat de la décomposition du catalyseur.

La réaction d'hydrosilylation peut être réalisée dans un solvant ou en l'absence de solvant. En variante, l'un des réactifs peut jouer le rôle de solvant : par exemple le composé à double liaison éthylénique ou à triple liaison acétylénique.

Des solvants appropriés sont des solvants miscibles avec le composé à motif Si-H.

Dans les conditions de la réaction d'hydrosilylation, le complexe catalyseur doit être solubilisé dans le milieu réactionnel.

Des exemples de solvants utilisables pour l'hydrosilylation sont notamment les hydrocarbures aliphatiques (tels que pentane, hexane, heptane, pentaméthylheptane ou les fractions de distillation du pétrole) ; les hydrocarbures aromatiques (tels que le benzène le toluène et les xylènes : ortho-xylène para-xylène et méta-xylène) ; les hydrocarbures aliphatiques ou aromatiques halogénés (tels que tétrachloroéthylène) ; ou les éthers (tels que le tétrahydrofuranne ou le dioxanne).

La réaction d'hydrosilylation peut être conduite à une température comprise entre 15°C et 300°C, par exemple entre 20 et 240°C, mieux encore entre 70 et 200°C, notamment entre 50 et 150°C, très préférablement entre 100 et 100°C.

La quantité relative de composé insaturé et de composé à motif Si-H peut être contrôlée de façon à assurer la réaction de toutes les insaturations avec des liaisons Si-H.

Généralement, le rapport molaire des insaturations aux liaisons Si-H varie entre 1:100 et 10:1.

Selon l'invention la réaction d'hydrosilylation est réalisée en présence d'une quantité catalytique d'un ou plusieurs complexes selon l'invention. Par quantité catalytique on entend moins d'un équivalent molaire de platine par rapport à la quantité d'insaturations présentes dans le milieu réactionnel.

De façon générale il suffit d'introduire dans le milieu réactionnel moins de 1000 ppm, de préférence moins de 100 ppm, mieux encore moins de 50 ppm de platine calculé par rapport à la masse totale du composé insaturé et du composé à motifs Si-H.

Concernant la préparation de la composition selon l'invention, il s'agit de mettre en oeuvre et de mélanger des composés -A-, -B-, -C-, éventuellement -D- et un ou plusieurs autres additifs traditionnels.

Les opérations de mélange sont parfaitement à la portée de l'homme du métier.

Les POS -A- & -B-, les inhibiteurs -D- et les autres additifs classiques telles que les charges, sont des commodités parfaitement disponibles accessibles à l'homme du métier.

S'agissant des complexes métalliques (I) formant les catalyseurs -C-, on a vu ci-dessus que les catalyseurs -C- comprenant des complexes : 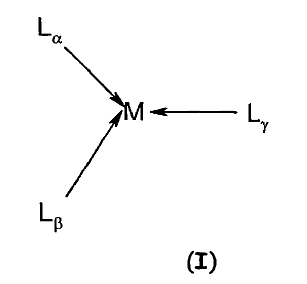 avec Lα et/ou Lβ, de formule (III.1) ou (III.2),peuvent être obtenus à partir de complexes (I) dans lesquels Lγ est de formule (II) et Lα & Lβ sont de formule (IV), ces derniers étant déplacés in situ par des inhibiteurs -D- de formule (III.1) ou (III.2) .

Ces complexes (I) dans lesquels Lγ est de formule (II) et Lα & Lβ sont de formule (IV) sont préparés de façon conventionnelle, par exemple à partir de complexes connus de l'état de la technique par échange de ligand, c'est-à-dire par addition du carbène approprié de formule II. à un complexe métallique du métal M, en solution, désigné complexe précurseur.

Des complexes précurseurs appropriés sont, par exemple, le complexe de Karstedt de formule :

P†₂[ViMe₂Si-O-SiMe₂Vi]₃

dans laquelle Vi représente le radical vinyle.

Les complexes de formule I sont généralement préparés à partir de complexes précurseurs présentant, comme ligand, au moins un composé dioléfinique de formule (IV.P): 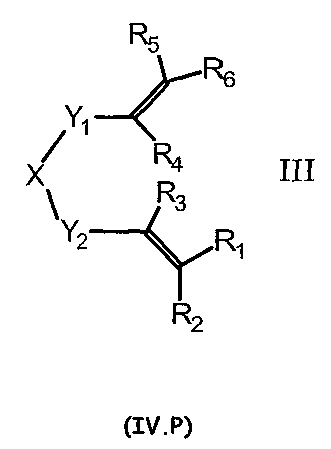 dans laquelle R₁, R₂, R₃, R₄, R₅, R₆, X, Y₁ et Y₂ sont tels que définis ci-dessus pour la formule I.

Ces ligands sont soit disponibles dans le commerce, soit facilement préparés par l'homme du métier à partir de composés commerciaux.

Lorsque X représente NRₑ et Y₁ et Y₂, indépendamment l'un de l'autre, représentent CRₐR_{b}, les composés de formule (IV.P) ont des amines qu'il est facile de préparer par mise en oeuvre des procédés classiques de la chimie organique. Ainsi, lorsque Rₐ est distinct d'un atome d'hydrogène, ces amines peuvent être facilement préparées à partir de l'amine primaire correspondante de formule RₐNH₂ par action de chlorures appropriés préférablement en présence d'une base organique ou minérale.

Lorsque la dioléfine (IV.P) est symétrique (c'est-à-dire que R₄ = R₃ ; R₅ = R₂ ; R₁ = R₆ ; et Y₁ = Y₂), on fait réagir RₑNH₂ avec deux équivalents d'un chlorure de formule :

Cl-CRₐR_{b}-CR₃=CR₁R₂ (IV.P')

en présence d'une base.

Lorsque la dioléfine (IV.P) est disymétrique, il est préférable de protéger le groupe amino de RₐNH₂ par un groupe protecteur P conventionnel approprié avant de faire réagir le composé résultant de formule RₑNHP sur le chlorure de formule (IV.P") :

Cl-CRₐR_{b}-CR₃=CR₁R₂ (IV.P")

en présence d'une base appropriée.

Puis, après déprotection, on fait réagir l'amine résultante sur un chlorure de formule (IV.P"'):

Cl-CRₐR_{b} -CR₄=CR₅R₆ (IV.P''')

de façon à obtenir l'amine attendu.

Dans les formules IV.P' IV.P" IV.P"'ci-dessus, les substituants R₁, R₂, R₃, R₄, R₅ et R₆ sont tels que définis pour la formule I ; Rₐ, R_{b} sont tels que définis ci-dessus.

Les groupes protecteurs P des fonctions amines ainsi que les méthodes de déprotection correspondantes sont décrits dans Protective Groups in Organic Synthesis, Greene T.W. et Wuts P.G.M., ed. John Wiley et Sons, 1991, et dans Protecting Groups, Kocienski P.J., 1994, Georg Thieme Verlag.

Lorsque Rₑ représente un atome d'hydrogène, il est souhaitable de sélectionner, à titre de composé de départ, l'amine de formule IV.Q suivante, préalablement protégée au niveau de la fonction amino par un groupe protecteur P tel que défini ci-dessus :

NH₂-CRₐ² R_{b}² -CR₃=CR₁R₂ (IV.Q).

On fait réagir l'amine IV.Q protégée avec un chlorure de formule VI telle que définie ci-dessus, de préférence en présence d'une base, puis par déprotection de la fonction amino, on isole le composé attendu de formule IV.P.

Des bases appropriées sont par exemple une base organique choisie parmi la triéthylamine, la diisopropylamine, la pyridine et la N,N-diméthylaniline ou une base minérale telle que NaOH, KOH, NaHCO₃, Na₂CO₃, KHCO₃ et K₂CO₃.

Lorsque X représente O et Y représente CRₐR_{b}, les composés de formule (IV) sont des éthers. Ces éthers sont disponibles dans le commerce ou préparés de façon connue en soi à partir de composés disponibles dans le commerce.

Les composés de formule IV dans lesquels X représente cR_{f}R_{g} et Y représente CRₐR_{b} sont des dioléfines facilement accessibles à l'homme du métier par synthèse ou disponibles dans le commerce.

Les composés de formule IV dans lesquels X représente NRₐ où Rₐ représente H ou alkyle ; R₁ = R₆ ; R₂ = R₅ ; R₃ = R₄ ; et Y₁ = Y₂ = SiR_{c}R_{d} peuvent être préparés par action d'une amine Rₐ-NH₂ avec deux équivalents d'un chlorure de silyle de formule :

ClSiR_{c}R_{d}-CR₃=CR₁R₂

dans laquelle R_{c}, R_{d}, R₁, R₂ et R₃ sont tels que définis ci-dessus.

Les composés de formule IV dans lesquels X représente NRₐ, Rₐ étant tel que défini ci-dessus à la formule I ; Y₁ = Y₂ = SiR_{c}R_{d} où R_{d} est tel que défini ci-dessus à la formule I ; les deux groupes R_{c} forment ensemble la chaîne :
- NRₐ-(SiR_{d}R_{c}^{o}-NRₐ)ₙ-
   dans laquelle Rₐ et R_{d} sont tels que définis ci-dessus ; n représente un entier de 1 à 3 ; R_{d}^{o} représente -CR₃=CR₁R₂ ; R₁ = R₆ ; R₂ = R₅ et R₃ = R₄, peuvent être préparés par réaction de l'amine Rₐ-NH₂ avec le chlorure de silyle de formule :

   Cl₂SiR_{d}-CR₃=CR₁R₂

   dans laquelle R_{d}, R₁, R₂ et R₃ sont tels que définis ci-dessus.

Les composés de formule IV dans lesquels X représente O, et Y₁ et Y₂ représentent SiR_{c}R_{d} sont des siloxanes linéaires, ramifiés ou cycliques qui sont commercialisés ou dont la préparation est possible à partir de composés commerciaux, par mise en oeuvre des procédés classiques de l'état de la technique. Des exemples de siloxanes de formule IV préférés sont ViMe₂SiOSiMe₂Vi et (MeViSiO)₃, la seconde formule représentant un cyclosiloxane dans lesquels Vi représente vinyle.

Dans le cas des composés symétriques de formule IV, c'est-à-dire ceux pour lesquels R₁ = R₆ ; R₂ = R₅ ; R₃ = R₄ et Y₁ = Y₂, l'une des variantes de synthèse suivante pourra être mise en oeuvre.

(Variante a) : Pour la préparation desdits siloxanes symétriques de formule IV pour lesquels R₁, R₂, R₃, R_{c} et R_{d} sont indépendamment choisis parmi alkyle, aryle, alcényle et alcynyle, on peut faire réagir un chlorure de silyle de formule Cl₂SiR_{c}R_{d} avec un composé organométallique de formule :

CR₁R₂=CR₃-Mg-Hal

où R₁, R₂, R₃ sont tels que définis ci-dessus et hal représente un atome d'halogène dans les conditions habituelles de réaction mettant en jeu des magnésiens.

(Variante b) : Pour la préparation desdits siloxanes symétriques de formule IV pour lesquels R₁ = R₂ = R₃ = H et R_{c}, R_{d} sont choisis parmi alcényle, alcynyle, aryle et alkyle, on peut faire réagir un chlorure de silyle de formule Cl₂SiR_{c}-CH=CH₂ avec un composé organométallique de formule :

R_{d}-Mg-hal

dans laquelle R_{d} est tel que défini ci-dessus et hal représente halogène.

Pour la mise en oeuvre de cette variante, l'homme du métier pourra se reporter à J. Gen. Chem., USSR, 1977, 47, 1402-1406.

(Variante c) : Pour la préparation desdits siloxanes symétriques de formule IV dans laquelle R₁ = R₃ = H et R₂ représente alkyle, on peut faire réagir un siloxane de formule :

H-SiR_{c}R_{d}-O-SiR_{c}R_{d}H

avec deux équivalents d'un hydrocarbure acétylénique de formule H-C≡C-R₂ dans laquelle R₂ est tel que défini ci-dessus.

Des siloxanes cycliques de formule IV sont décrits dans US 4 593 084.

Les composés de formule IV dans laquelle X représente CR_{f}R_{g} et Y₁ et Y₂ représentent indépendamment -SiR_{c}R_{d} peuvent être préparés par mise en oeuvre d'un procédé analogue à l'un de ceux décrits dans :
- J. of Organometallic Chemistry, 1996, vol. 521, 99-107 (lequel procédé est plus particulièrement approprié à la préparation des composés symétriques de formule IV dans laquelle Y₁ = Y₂ ; R_{f} = R_{g} = H ; R_{c}, R_{d} représentent alkyle ou aryle éventuellement substitué par alkyle ; R₃ représente un atome d'hydrogène ; alkyle ; ou aryle éventuellement substitué; et R₁, R₂ sont choisis parmi un atome d'hydrogène et alkyle) ;
- J. of Organometallic Chemistry, 1997, vol. 545-546, 185-189 (lequel procédé est plus particulièrement approprié à la préparation de composés symétriques de formule IV dans laquelle Y₁ = Y₂ ; R_{f} = R_{g} = Cl ou Br ; R_{c} et R_{d} représentent alkyle ; R₁ = R₂ = R₃ = un atome d'hydrogène) ;
- J. Chem. Soc., Perkin Trans II, 1987, p. 381 (lequel procédé est plus particulièrement approprié à la préparation des composés symétriques de formule III dans laquelle Y₁ = Y₂ ; R_{f} = R_{g} = SiG₁G₂G₃ ; R_{c} et R_{d} représentent alkyle ; R₁ = R₂ = R₃ = un atome d'hydrogène).

Les carbènes de formules II peuvent être préparés par déprotonation de sels d'imidazolium, de sels de tétrazolium, de sels de triazolium, ou de sels de pyrazolium suivant le cas, sous l'action d'une base.

Ces réactions peuvent être schématisées comme suit :

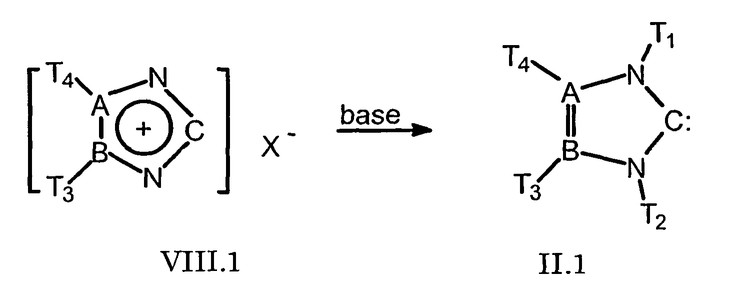

Dans ces schémas réactionnels, T₁, T₂, T₃, T₄, A et B sont tels que définis ci-dessus pour la formule I et X⁻ représente un anion.

La nature de l'anion X - n'est pas critique selon l'invention. L'anion X - est l'anion dérivé d'un acide de Brönsted (acide protique) organique ou minéral. Habituellement, l'anion X - est dérivé d'un acide présentant un pKa inférieur à 6. De préférence, X ⁻ dérive d'un acide de pKa inférieur à 4, mieux encore inférieur à 2. Les pKa dont il est question ici sont les pKa des acides tels que mesurés dans l'eau.

Des exemples d'acides sont les acides carboxyliques de formule Gₒ-COOH dans laquelle Gₒ représente alkyle, et par exemple (C₁-C₂₂)alkyle ; ou bien aryle, et par exemple (C₆-C₁₈)aryle éventuellement substitué par un ou plusieurs alkyle, de préférence un ou plusieurs (C₁-C₆)alkyle ; les acides sulfoniques de formule Gₒ-SO₃H dans laquelle Gₒ est tel que défini ci-dessus ; et les acides phosphoniques de formule Gₒ-PO₃H dans laquelle Gₒ est tel que défini ci-dessus ; d'autres acides sont HF, HCl, HBr, HI, H₂SO₄, H₃PO₄ et HClO₄.

Des exemples préférés d'acides carboxyliques sont l'acide acétique, l'acide benzoïque, et l'acide stéarique. A titre d'acide sulfonique préféré, on citera l'acide benzène sulfonique et à titre d'acide phosphonique préféré, on mentionnera l'acide phénylphosphonique.

Selon l'invention, on préfère plus particulièrement les anions X - dérivés des acides HF, HCl, HBr, HI, H₂SO₄, HBF₄ et H₃PO₄.

Ainsi, des anions X ⁻ particulièrement préférés, selon l' invention, sont les anions halogénure, sulfate, hydrogénosulfate, phosphate, hydrogénophosphate et dihydrogénophosphate. On peut également mentionner, à titre d'anion, les tétrafluoroborates et hexaphénylphosphate.

Les bases utilisables pour la déprotonation des sels de formules VIII. sont des bases fortes choisies parmi les hydrures de métal alcalin, les hydroxydes de métal alcalin, les carboxylates de métal alcalin, les alcoolates de métal alcalin et les amidures de métal alcalin.

Des exemples de base appropriée sont donc l'hydrure de sodium, le méthylate de sodium, le tert-butylate de potassium, le diisopropylamidure de lithium et leurs mélanges.

La réaction de déprotonation est de préférence réalisée dans un solvant capable de dissoudre au moins partiellement le sel de départ de formule VIII, ainsi que les autres réactifs.

La nature du solvant dépend également de la force de la base. En effet, dans le cas d'une base forte et de sels de départ particulièrement réactifs, il peut être nécessaire d'opérer à basse température.

Généralement, la température réactionnelle est comprise entre 40°C et - 78°C, préférablement entre 30 et -50°C, mieux encore entre 25 et -40°C, par exemple entre 20 et -30°C.

Des solvants utilisables dans le procédé de préparation des carbènes sont les éthers cycliques ou non, tels que l'éther de diéthyle, l'éther de diisopropyle, le tétrahydrofuranne, le dioxanne, le diméthoxyéthane ou l'éther diméthylique du diéthylèneglycol.

D'autres solvants utilisables sont le diméthylsulfoxyde, le diméthylformamide, le diméthylacétamide, l'hexaméthylphosphorylamide : [(CH₃)₂N]₃PO et l'hexaméthylphosphoramide [(CH₃)₂N]₃P.

Les carbènes de formule II dans lesquels A et B représentent tous deux un atome de carbone peuvent également être préparés par réduction des thiones correspondantes de formule IX :

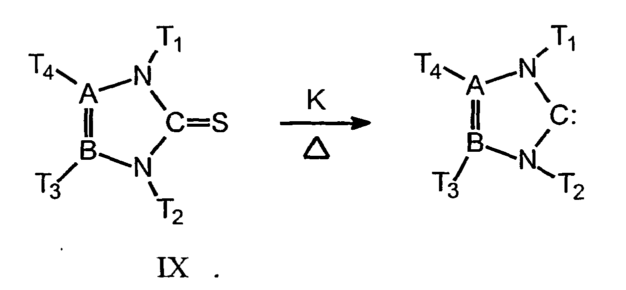

Cette réaction a été décrite par N. Kuhn dans Synthesis, 1993, 561. De préférence, la réduction est conduite dans un solvant du type éther ou amide, tel que défini ci-dessus, à une température comprise entre 50 et 150°C, en présence de potassium.

Les sels de départ de formule VIII. peuvent quant à eux préparés par réaction des imidazoles, pyrazoles, triazoles et tétrazoles correspondants avec un acide approprié.

La nature de l'anion X - dans les sels de formule VIII dépend de l'acide utilisé à cette étape. Les acides utilisables sont par exemple ceux énumérés ci-dessus et dont dérive X ⁻.

Une autre méthode de synthèse des sels de formule VIII dans laquelle A = B = C est décrite dans US 5 077 414.

Ce procédé comprend la réaction d'un composé X α-dicarbonylé de formule : 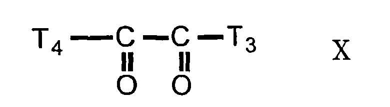 dans laquelle T₃ et T₄ sont tels que définis ci-dessus avec HCHO et deux amines de formules T₁-NH₂ et T₂-NH₂ en présence d'un acide approprié.

D'autres méthodes de préparation des sels de formule VIII sont proposées dans Chem. Eur. J. 1996, 2, n° 12, pages 1627-1636 et Angew. Chem. Int. Ed. Engl. 1997, 36, 2162-2187.

Les composés de formule IX peuvent être préparés par condensation d'une thiourée appropriée de formule XI : 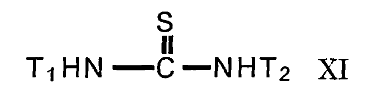 avec une α-hydroxycétone de formule XII : 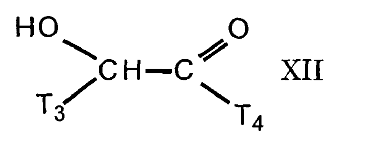 dans lesquelles T₁, T₂, T₃ et T₄ sont tels que définis ci-dessus. Des conditions opératoires appropriées sont notamment décrites par N. Kuhn dans Synthesis, 1993, 561.

Selon un mode de réalisation particulièrement préféré de l'invention, le complexe métallique de l'invention a pour formule : 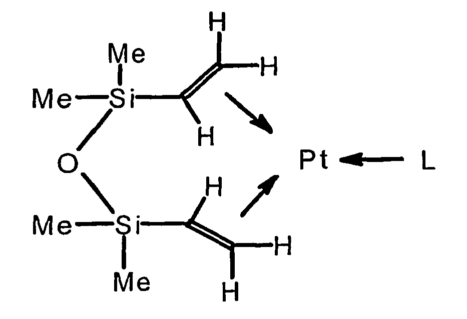 dans laquelle Lγ est tel que défini ci-dessus.

Une méthode simple de préparation de ce complexe consiste à faire réagir le carbène L avec le catalyseur de Karstedt de formule moyenne P†₂[ViMe₂Si-O-SiMe₂Vi]₃ dans laquelle Vi représente le radical vinyle.

Cette réaction peut être réalisée en masse ou dans un solvant.

Des exemples de solvants appropriés sont les éthers cycliques ou non, tels que l'éther de diéthyle, l'éther de diisopropyle, le tétrahydrofuranne, le dioxanne, le diméthoxyéthane ou l'éther diméthylique de diéthylèneglycol ; les amides tels que le diméthylformamide, ou le diméthylacétamide; et les hydrocarbures aromatiques (tels que le toluène, les xylènes et plus particulièrement le toluène).

De façon avantageuse, la réaction est conduite dans un éther, et préférablement dans le tétrahydrofuranne.

La température de réaction varie habituellement entre 10 et 50°C, de préférence entre 15 et 35°C, très préférablement entre 20 et 25°C.

Il est souhaitable d'opérer en présence d'un léger excès de carbène par rapport au platine. Ainsi, le rapport molaire du carbène L au platine varie généralement entre 1 et 1,3, de préférence entre 1 et 1,1.

Une façon simple de procéder consiste à couler, à la température appropriée, une solution du carbène dans un solvant, dans un réacteur contenant une solution du catalyseur de Karstedt dans ce même solvant.

La molarité des solutions du carbène et du catalyseur n'est pas critique selon l'invention.

Selon une variante, ce procédé consiste essentiellement à mettre en présence:
- au moins un sel de formule (VIII) : 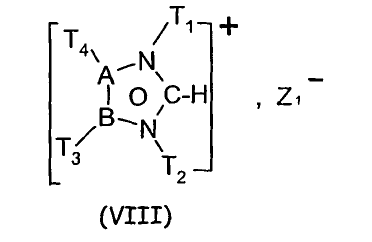 dans laquelle :
   - A, B, T₁, T₂, T₃, T₄ sont tels que définis ci-dessus;
   - Z₇ représente indépendamment un anion dérivé d'un acide de Brönsted (acide pratique) de préférence choisi dans le groupe comprenant :
      - les acides carboxyliques de formule Go-COOH dans laquelle Go représente un alkyle, et avantageusement un alkyle en C₁-C₂₂ ; un aryle, avantageusement un aryle en C₆-C₁₈ éventuellement substitué par un ou plusieurs alkyle en C₁-C₆ ;
      - les acides sulfoniques de formule Go-SO₃H dans laquelle Go est tel que défini ci-dessus ;
      - les acides phosphoriques de formule Go-PO₃H dans laquelle Go est tel que défini ci-dessus ;
      - les acides minéraux suivants : HF, HCl, HBr, HI, H₂SO₄, H₃PO₄, HClO₄ et HBF₄ pris à eux seuls ou en combinaison entre eux ;
      - et leurs mélanges ;
- au moins un complexe précurseur de formule (IVp) sélectionné dans le groupe comportant des complexes précurseurs (IVp) appropriés sont les complexes de Karstedt de formule :

   P†2[ViMe₂Si-O-SiMe₂Vi]₃

   dans laquelle Vi représente le radical vinyle;
- au moins un solvant (V)
- et au moins une base (VI).

Avantageusement, on choisit le solvant V, de telle sorte que la solubilité du sel (VIII) et de la base (VI) dans ledit solvant (V) soit d'au moins 1% poids/poids à 25°C, respectivement.
Le solvant (V) est choisi parmi les solvants aprotiques polaires dont la température d'ébullition à 1 atm est inférieure à 150°C préférablement à 120°C, de préférence dans le groupe comprenant :
- les éthers cycliques ou non et en particulier le TétraHydroFuranne (THF), l'éther de diéthyle, l'éther de diisopropyle, , le dioxanne, le diméthoxyéthane ou l'éther diméthylique du diéthylèneglycol ;
- le diméthylformamide, le diméthylacétamide, l'hexaméthylphosphorylamide:[(CH₃)₂N]₃PO et l'hexaméthylphosphoramide[(CH₃)₂N]₃P;
le THF étant particulièrement préféré.
La (ou les) base(s) (VI) est (sont) choisie(s) parmi les bases fortes aptes à déprotoner le sel (VIII), de préférence dans le groupe comprenant :
les hydrures de métal alcalin, les hydroxydes de métal alcalin, les carboxylates de métal alcalin, les alcoolates de métal alcalin et les amidures de métal alcalin,
et plus préférentiellement encore dans le groupe comprenant :
   l'hydrure de sodium, le méthylate de sodium, le tert-butylate de potassium, le diisopropylamidure de lithium et leurs mélanges.
La concentration de la base (VI) dans le milieu réactionnel en M/l de solvant (V) est de préférence :

| | |
|---|---|
| | 10⁻⁶ < VI ≤ 1 |
| et plus préférentiellement encore | 10⁻³ ≤ VI ≤ 10⁻¹ |

On met en oeuvre le sel (VIII) et la base (VI) en quantités telles que le rapport R_{VI/} VIII de normalité VI / VIII soit défini comme suit:
R_{VI / VIII} ≤ 1
• de préférence 1 ≤ R _{VI / VIII} ≤ 5
• et plus préférentiellement encore 1 ≤ R _{VI / VIII} ≤ 3.
En résumé, ce procédé consiste essentiellement à :
a) mettre en solution le sel (VIII) et le composé (IVp) dans le solvant (V),
b) incorporer en plusieurs fois la base (VI) à la solution de (VIII) et (IVp) dans (V),
c) maintenir le milieu réactionnel ainsi constitué sous agitation, de préférence à l'abri de la lumière, jusqu'à formation du composé (I),
d) récupérer le composé (I) formé, de préférence par évaporation,
e) éventuellement purification,
f) éventuellement séchage.
De préférence, on réalise au moins l'une des étapes a), b), c), de préférence les trois, à une température comprise entre 5 et 50 °C, de préférence à température ambiante.
De préférence, on utilise :
- au moins un sel (VIII) de formule : 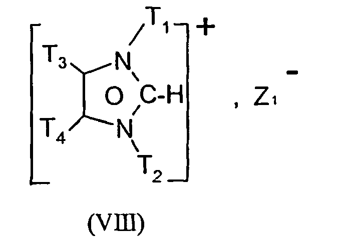 dans laquelle :
   - T₁, T₂ sont identiques et représentent (C₁-C₈)alkyle ou (C₃-C₈)cycloalkyle ;
   - T₃, T₄ sont identiques et représentent l'hydrogène ou bien représentent ensemble un phényle ;
   - Z₁ est un halogène, de préférence Cl, I, ou BF₄ ;
- au moins un complexe de Karstedt tel que défini dans le brevet US 3 775 452, de préférence un composé de formule (IVp): 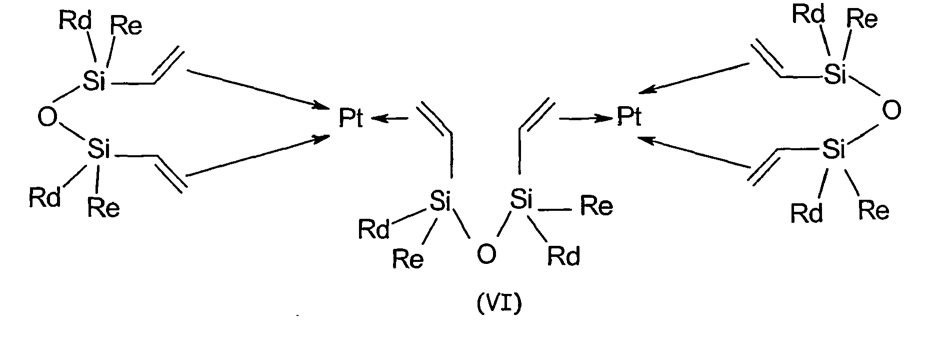 dans laquelle :
   Rd, Re sont identiques et représentent CH₃ ;
- un solvant (V) comprenant du THF,
- et au moins une base (VI) comprenant du *tert-*butylate de potassium (t-BuOK).

Les catalyseurs ainsi préparés sont utilisables dans des réactions d'hydrosilylation. Ils permettent une catalyse homogène de la réaction.

Ils donnent également accès à des compositions silicones monocomposantes, de préférence de type EVC polyaddition, présentant des pot-life beaucoup plus importants que celles préparées avec les catalyseurs à base de platine classiques, et ce, en n'utilisant que peu ou pas d'inhibiteurs -D-.

L'invention est illustrée à la lumière des exemples suivants.

### EXEMPLES

### EXEMPLE 1

### 1 - Préparation du carbène de formule :

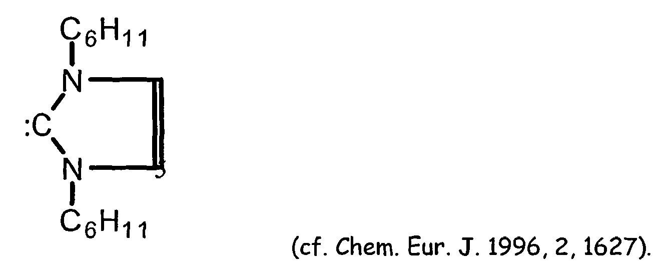

Pour cette réaction, toute la verrerie utilisée est séchée à l'étuve à 150° C pendant une nuit puis refroidie sous argon.

Le THF est distillé sur sodium/benzophénone juste avant utilisation.

Un tricol de 100 ml est chargé avec 2,70 g (10 mmol) de chlorure de 1,3-dicyclohexylimidazolinium puis purgé par un courant d'argon avant d'être mis en suspension dans 20 ml de THF. Environ 50 ml d'ammoniac sont ensuite condensés à - 78° C dans le tricol entraînant la dissolution partielle du sel. Le bain acétone/carboglace est retiré et 270 mg de NaH à 95% (10,7 mmol - 1,07 éq.) sont ajoutés lentement à l'aide d'une ampoule à solide. Chaque addition de NaH est suivie par un dégagement gazeux important (H₂) et le sel en suspension se dissout progressivement. Le mélange réactionnel est agité pendant 1h30 au reflux du solvant. L'ammoniac est ensuite évaporé et une solution jaune pâle est obtenue ainsi qu'un solide en suspension (NaCl). Cette solution dont la concentration en carbène est de 0,5M dans le THF est utilisée immédiatement pour la préparation des complexes.

### 2 - Préparation du complexe de platine de formule (catalyseur C1):

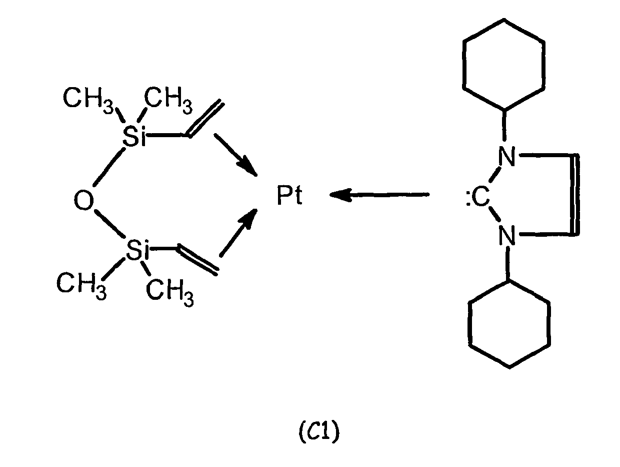

On prépare une solution de Karstedt à 10% en poids en platine (soit 1,52 mmol de platine) conformément à la procédure décrite dans US 3 775 452.

A 3 g de cette solution, maintenue sous agitation et diluée dans 10 ml de tétrahydrofuranne, on ajoute goutte à goutte à l'aide d'une ampoule à brome, 3,2 ml d'une solution 0,5 M du carbène de formule : 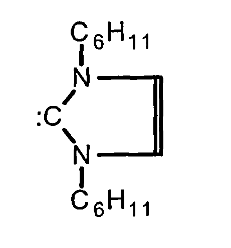 dans le tétrahydrofurane. L'addition est complète au bout de 10 minutes. Le mélange réactionnel est ensuite agité pendant 50 minutes à température ambiante. Le cas échéant, le léger insoluble est filtré et le mélange réactionnel est concentré sous vide.

Après concentration, un résidu visqueux légèrement jaune est obtenu. En quelques heures, un solide blanc abondant précipite dans le divinyltétraméthyldisiloxane résiduel. Celui-ci est filtré, lavé par quelques millilitres d'hexaméthyldisiloxane, puis de pentane. On obtient ainsi 570 mg (rendement 60%) d'une poudre blanche analytiquement pure.
Une fraction de cette poudre est recristallisée dans un mélange dichlorométhane/éthanol absolu. Les cristaux résultants sont analysés par diffraction des rayons X. L'analyse confirme la structure du complexe obtenu.

### EXEMPLE 2

### 1 - Préparation du carbène de formule:

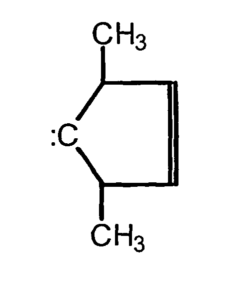

Ce carbène est préparé par mise en oeuvre du mode opératoire illustré à l'exemple 1, paragraphe 1, sinon que les 2,7 g (10 mmol) de chlorure de 1,3-dicyclohexylimidazolinium sont remplacés par 2,3 g (10 mmol) d'iodure de 1,3-diméthylimidazolinium.

### 2 - Préparation du complexe du platine de formule C2:

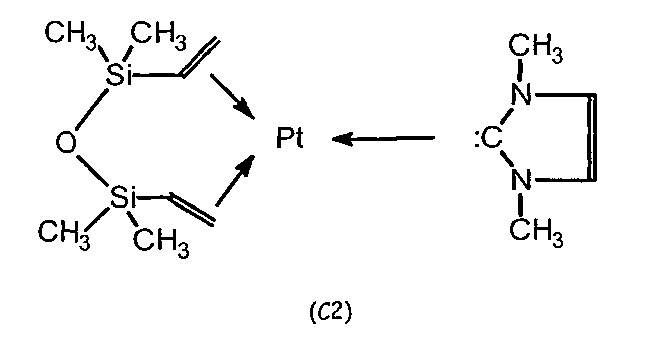

Ce complexe est préparé par mise en oeuvre du mode opératoire de l'exemple 1, sinon que le carbène utilisé comme produit de départ a pour formule:

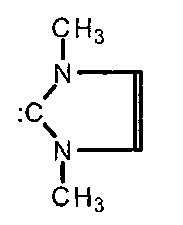

Après concentration, une pâte jaune est obtenue. Celle-ci est filtrée, lavée abondamment par du pentane chaud. Un solide blanchâtre est isolé (rendement 35%), lequel est recristallisé dans l'éthanol. Les cristaux résultants sont analysés par diffraction des rayons X. L'analyse confirme la structure du complexe obtenu.

### EXEMPLE 3 : Préparation d'un complexe (III.2) platine de formule (catalyseur C3) :

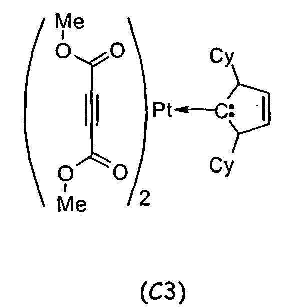

Dans un ballon monocol de 50ml muni d'une agitation magnétique sont chargés 500mg (0,815 mmol) du complexe de l'exemple 1. Le ballon est purgé par un courant d'Argon. Le complexe est ensuite dissout dans 25ml de THF anhydride. On injecte ensuite 116µl (135mg - 0,94 mmol - 5 éq.) de diméthylacétylène-dicarboxylate. Le mélange réactionnel est porté au reflux du solvant pendant 2h00. Après retour à température ambiante, le THF est évaporé sous vide le solide obtenu est dissous dans le minimum de dichlorométhane. Le produit brut est chromatographié sur colonne de silice (Eluant: Cyclohexane/Acetate d'éthyle - 80/20). Après concentration sous vide, les paillettes jaunes obtenues sont lavées avec du propan-2-ol puis essorées sous vide. 350 mg (Rendement 60%) d'une poudre jaune analytiquement pure sont obtenus.

### EXEMPLE 4 Préparation de compositions silicones monocomposantes comprenant les POS -A-&-B- et les catalyseurs -C1-, -C2- ou -C3- des exemples 1,2 et 3 respectivement.

Afin de former une phase homogène avec le milieu silicone, les catalyseurs -C1- -C2- & -C3- des exemples 1, 2 & 3, sont introduits en solution dans le toluène. Un système réactionnel de base (M) est préparé en mélangeant 100 grammes d'un polyorganovinylsiloxane contenant 0,61% de vinyl en poids et 27 grammes d'un polyorganohydrogénosiloxane contenant 0,17 % en poids d'hydrogène. Pour chaque exemple, le platine est ajouté dans le mélange (M) à raison de 80 ppm en poids. En fonction des exemples, la nature du catalyseur et celle de l'inhibiteur varient (tableaux 1 & 2 cidessous). Le catalyseur de Karstedt (platine au degré d'oxydation zéro en solution dans une huile silicone vinylée) est pris comme système de référence.
Les inhibiteurs mis en oeuvre sont les suivants : 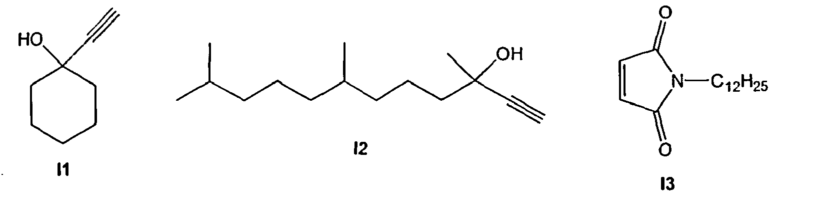 Chaque système est évalué par DSC et le temps de gel indiqué correspond au temps de prise en masse du mélange réactionnel.
Les résultats obtenus sont donnés dans les tableaux 1 & 2 ci-dessous

**TABLEAU 1**

| Essai | Catalyseur | Inhibiteur | [Inh]/[Pt] | Onset Temp. | Exotherme | Tgel | |
|---|---|---|---|---|---|---|---|
| | | | | (°C) | (°C) | T.A | 60°C |
| 1 | C2 | / | / | 70 | 87 | 1 j. | (i) |
| 2 | C1 | / | / | 75 | 111 | 1 j. | (ii) |
| 3 | C2 | I1 | 60 | 144 | 148 | 40 j. | 36 h |
| 4 | C2 | I2 | 60 | 145 | 147 | 40 j. | 36 h |
| 5 | C1 | I1 | 60 | 137 | 149 | 40 j. | 36 h |
| 6 | C1 | I2 | 60 | 141 | 149 | 40 j. | 36 h |
| 7 | C1 | I3 | 60 | 142 | 149 | >40 j. | (ii) |
| 8 | C3 | / | / | 115 | 130 | >40 j | (ii) |

| | | | | | | | |
|---|---|---|---|---|---|---|---|
| (i) rapport molaire entre l'inhibiteur et le platine (ii) non mesurée | | | | | | | |

**TABLEAU 2**

| Contre-essai | Catalyseur | Inhibiteur | [Inh]/[Pt] (i) | Onset Temp. | Exotherme | tgel | |
|---|---|---|---|---|---|---|---|
| | | | | (°C) | (°C) | T.A | 60°C |
| 1' | Karstedt | / | / | | (ii) | qq min. | (iii) |
| 2' | Karstedt | I1 | 60 | 92 | 96 | 5 j. | 5 h |
| 3' | Karstedt | I2 | 60 | 99,5 | 103,5 | 5 j. | 5 h |
| 4' | Karstedt | I3 | 60 | 79 | 84 | 1 j. | (ii) |

| | | | | | | | |
|---|---|---|---|---|---|---|---|
| (i) rapport molaire entre l'inhibiteur et le platine (ii) non mesurée (iii) non mesurable en raison de la réticulation trop rapide du système | | | | | | | |

### EXEMPLE 5 Composition silicone EVC monocomposante selon l'invention

(toutes les parties sont données en poids).

### 5.1 Préparation

Dans un pétrin malaxeur à bras en Z, on mélange pendant 2 heures à température ambiante (23°c) :
- 88 parties d'un polyorganosiloxane qui est un poly(diméthyl)(méthylvinyl)siloxane bloqué à chacune de ses deux extrémités par un motif triméthylsiloxy contenant dans la chaîne 720 ppm de groupes Vi, ayant une viscosité de 5 millions de mPa.s à 25°C,
- 12 parties d'un polyorganosiloxane qui est un poly(diméthyl)siloxane bloqué à chacune de ses deux extrémités par un motif diméthylvinylsiloxy contenant 120 ppm de groupes Vi, ayant une viscosité de 2 millions de mPa.s à 25°C,
- 43 parties de silice de combustion traité D₄ de surface spécifique de 60 m² / g,
- 2 parties d'une huile polydiméthylsiloxane bloquée à ses extrémités par des motifs diméthylhydroxysyloxy de viscosité 50 mPa.s à 25°C,
A cette préparation, sont additionnés sur cylindre :
- 2,82 parties d'une huile poly(diméthyl)(méthylhydro)siloxane bloqué à chacune de ses deux extrémités par un motif diméthylhydrosiloxy contenant 45000 ppm de groupes H, ayant une viscosité de 300 mPa.s à 25°C
- 3,75 ppm de platine métal apporté sous la forme d'un complexe du platine (0).
- 225 ppm d'un inhibiteur de la réaction d'addition SiH / SiVi qui est le diallylmalléate.

### 5.2 Caractérisation de la composition :

Une fraction de la masse homogène obtenue est utilisée pour mesurer les propriétés mécaniques de l'élastomère silicone résultant de la vulcanisation à chaud de la composition polyorganosiloxane. Pour ce faire la fraction de masse homogène retenue à cet effet est alors vulcanisée pendant 10 minutes à 170°C, en opérant dans un moule approprié permettant d'obtenir des plaques de 2 mm d'épaisseur. Des plaques à l'état non recuit (NR) sont obtenues. Une fraction des plaques subit ensuite un recuit (ou vieillissement) (R) de 4 heures à 200°C. Des échantillons normalisés sont alors prélevés dans l'ensemble de ces plaques et les propriétés sont mesurées :
- Dureté shore A (DSA) selon la norme DIN 53505.
- Résistance à la rupture (R/R) en MPa selon la norme AFNOR NF T 46002.
- Allongement à la rupture (A/R) en % selon la norme précédente.
- Module élastique (ME) à 100% en MPa selon la norme précédente.
Une autre fraction de la masse homogène obtenue sur le malaxeur est utilisée pour mesurer l'évolution de la plasticité Williams de l'élastomère silicone non vulcanisé en fonction du temps de stockage et de la température.

### 5.3 Résultats

### Propriétés mécaniques

Les résultats sont donnés dans le tableau 3 ci-dessous.

**TABLEAU 3**

| | **caractéristiques** | **Non recuit** | **Recuit 4h/200°C** |
|---|---|---|---|
| Pt Karstedt contre-exemple | DSA | 46 | 56 |
| | R / R ( Mpa) | 7,2 | 8,0 |
| | A/R(%) | 602 | 522 |
| | Mod. 100% (Mpa) | 1,4 | 1,8 |
| | | | |
| | **caractéristiques** | **Non recuit** | **Recuit 4h/200°C** |
| catalyseur de l'exemple 1 : Pt carbène-cyclohexyle | DSA | 47 | 58 |
| | R / R (Mpa) | 7,9 | 8,7 |
| | A/R(%) | 722 | 542 |
| | Mod. 100% (Mpa) | 1,2 | 1,8 |

Commentaires :
La composition selon l'invention conduit à un élastomère ayant des propriétés mécaniques légèrement supérieures à celles obtenues avec une composition classique, sans catalyseur Pt/carbène cyclohexyle, mais avec du Pt Karstedt.

### Plasticité Williams

Les résultats sont donnés dans le tableau 4 ci-dessous.

**TABLEAU 4**

| Pt Karstedt contre-exemple | **caractéristiques** | **25 °C** | **50°C** |
|---|---|---|---|
| | Temps (j) | 38 | 2 |
| | Augmentation de la consistance % | 100 | 100 |
| | | | |
| catalyseur de l'exemple 1: Pt carbène-cyclohexyle | **caractéristiques** | **25°C** | **50°C** |
| | Temps (j) | 80 | 8 |
| | Augmentation de la consistance % | 66 | 100 |

Commentaires :
La durée de vie en pot de la composition selon l'invention est nettement supérieure à celle obtenues avec une composition classique, sans catalyseur Pt/carbène cyclohexyle, mais avec du Pt Karstedt.

## Revendications

1. Composition silicone réticulable par hydrosilylation d'au moins un PolyOrganoSiloxane -A- (POS) porteur d'insaturation(s) éthylènique(s) et/ou acétylènique(s), à l'aide d'au moins un polyorganohydrogénosiloxane -B- ,en présence d'un catalyseur -C- métallique et comprenant éventuellement au moins un inhibiteur - D- de la réaction d'hydrosilylntion;
**caractérisée en ce que** le catalyseur -C- comporte au moins un composé sélectionné parmi les produits de formule (I) : 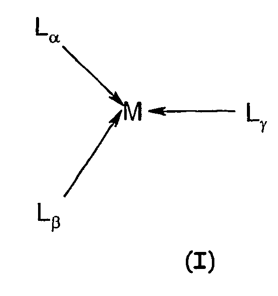 dans laquelle :
. M représente un métal choisi parmi les métaux du groupe 8 du tableau périodique tel que publié dans Handbook of Chemistry and Physics, 65^{éme} édition, 1984-1985 ;
. L_{γ} représente un carbène de formule (II) : 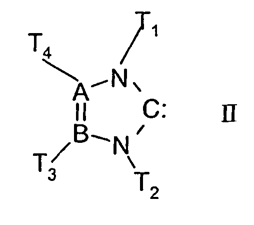 dans laquelle:
■ A et B représentent indépendamment C ou N, étant entendu que lorsque A représente N, alors T₄ ne représente rien et lorsque B représente N, alors T₃ ne représente rien :
■ T₃ et T₄ représentent indépendamment un atome d'hydrogène ; un groupe alkyle ; cycloalkyle éventuellement substitué par alkyle ou alkoxy ; aryle éventuellement substitué par alkyle ou alkoxy; alcényle ; alcynyle; ou arylalkyle dans lequel la partie aryle est éventuellement substituée par alkyle ou alkoxy ; ou bien
■ T₃ et T₄ peuvent former ensemble et avec A et B quand ceux-ci représentent chacun un atome de carbone, un aryle;
■ T₁ et T₂ représentent indépendamment un groupe alkyle ; un groupe alkyle éventuellement substitué par alkyle ; un groupe alkyle perfluoré ou éventuellement substitué par un groupe perfluoroalkyle ; cycloalkyle éventuellement substitué par alkyle ou alkoxy ; aryle éventuellement substitué par alkyle ou alkoxy, alcényle ; alcynyle ; ou arylalkyle dans lequel la partie aryle est éventuellement substituée par alkyle ou alkoxy; ou bien
■ T₁ et T₂ représentent indépendamment un radical monovalent de formule (V) suivante :
V₁ - V₂ (V)
dans laquelle .
• V₁ est un radical divalent hydrocarboné, de préférence un alkylène,
• *V₂* est un radical monovalent choisi dans le groupe des substituants suivants:
◆ Alcoxy, -OR^{o} avec R^{o} correspondant à hydrogène, alkyle, aryle
◆ Amine, de préférence N(R^{o})₂ avec R^{o} correspondant à hydrogène, alkyle, aryle
■ T₁ et T₂ représentent indépendamment un radical monovalent de formule (W) suivante :
W₁ -ω - W₂ (W)
dans laquelle :
● W₁ est un radical divalent hydrocarboné, de préférence un alkylène linéaire ou ramifié en C₁-C₁₀, éventuellement substitué,
● ω représente :
- R¹C - CR¹-
avec R¹ correspondant à H ou alkyle
ou
- C ≡ C -
● W₂ est un radical monovalent choisi dans le groupe des substituants suivants
● R² = alkyle, H
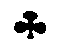 Si-alkyle ou Si-alcoxy, de préférence -Si(R³)₃ avec R³ = alkyle ;
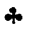 alcool, de préférence -C(R⁴)₂OH avec R⁴ = H ou alkyle ;
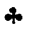 cétone, de préférence : 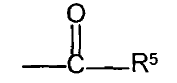 avec R⁵ = alkyle ;
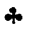 carboxy, de préférence 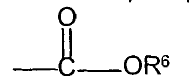 avec R⁶ = alkyle ;
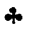 amide, de préférence 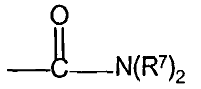 avec R⁷ = H, alkyle ;
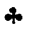 acyle, de préférence 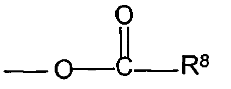 avec R⁸ = alkyle ;
ou bien encore
■ les substituants T₁, T₂, T₃ et T₄ peuvent former deux à deux, lorsqu'ils sont situés sur deux sommets adjacents dans la formule (II), une chaîne hydrocarbonée saturée ou insaturée;
. L_{α} et L_{β} sont des ligands identiques ou différents entre eux et
→ représentent chacun : 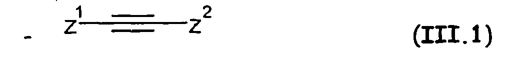 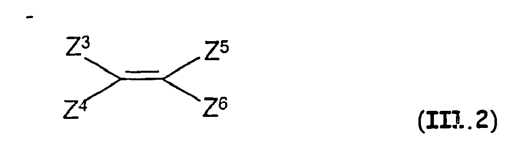 avec dans ces formules (III.1) et (III. 2) :
Z¹ , Z² Z³, Z⁴ Z⁵, Z⁶
● représentant indépendamment chacun :
a. l'hydrogène,
b. un halogène,
c. un cyano,
d. un groupe hydrocarboné électroattracteur saturé ou non saturé, de préférence adjacent à la double ou triple liaison,
e. deux Z^{1à6} vicinaux pouvant former ensemble un cycle électroattracteur avantageusement différent du carbène Lγ de formule (II) et comportant éventuellement des hétéroatomes (de préférence O, N, S );
● ou les substituants Z¹ et Z² forment ensemble, dans (III.1), un radical monovalent alcényle comportant au moins un reste électroattracteur de préférence adjacent à la triple liaison;
● ou bien encore Z³ à Z⁶ forment deux à deux, dans (III.2), un radical monovalent alcényle comportant au moins un reste électroattracteur de préférence adjacent à la double liaison,
→ ou forment ensemble le ligand Lδ de formule (IV) : 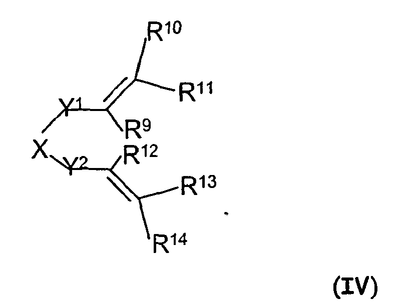
dans laquelle :
❖ Y₁ et Y₂ représentent indépendamment l'un de l'autre CRₐR_{b} ou SiR_{c}R_{d} ;
❖ X représente O, NRₑ ou CR_{f}R_{g}
❖ R¹⁰, R¹¹, R¹³ et R¹⁴, identiques ou différents, sont choisis parmi un atome d'hydrogène, un groupe alkyle et un groupe aryle éventuellement substitué par alkyle ;
❖ R⁹, R¹², Rₐ, R_{b}, R_{c} et R_{d} sont indépendamment choisis parmi un atome d'hydrogène ; un groupe alkyle ; acyle ; aryle éventuellement substitué par alkyle cycloalkyle éventuellement substitué par alkyle ; et arylalkyle dans lequel la partie aryle est éventuellement substitué par alkyle ;
❖ R_{c} et R_{d} sont indépendamment choisis parmi alkyle ; aryle éventuellement substitué par alkyle cycloalkyle éventuellement substitué par alkyle ; et arylalkyle dans lequel la partie aryle est éventuellement substituée par alkyle ; ou bien
❖ lorsque Y₁ et Y₂ représentent indépendamment SiR_{c}R_{d}, deux groupes R_{c} liés à deux atomes de silicium distincts forment ensemble une chaîne de formule : 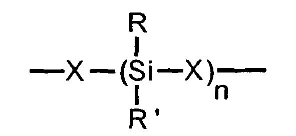 dans laquelle n est un entier de 1 à 3 ; X est tel que défini ci-dessus ; R et R', identiques ou différents, prennent l'une quelconque des significations données ci-dessus pour Rₑ, étant entendu que, lorsque n est 2 ou 3 un seul atome de silicium de ladite chaîne peut être substitué par un ou deux groupes alcényle ou alcynyle ; ou bien
lorsque Y₁ et Y₂ représentent indépendamment SiR_{c}R_{d}, deux groupes R_{c} liés à des atomes de silicium distincts forment ensemble une chaîne hydrocarbonée saturée, les deux groupes R_{c} ensemble avec lesdits atomes de silicium et X formant un cycle de 6 à 10 chaînons ; ou bien
❖ lorsque Y₁ et Y₂ représentent indépendamment CRₐR_{b}, deux groupes Rₐ liés à des atomes de carbone distincts forment ensemble une chaîne hydrocarbonée saurée, les deux groupes Rₐ ensemble avec les atomes de carbone qui les portent et X forment un cycle de 6 à 10 chaînons ; et
❖ R_{f} et R_{g} représentent indépendamment l'un de l'autre un atome d'hydrogène ; un groupe alkyle; acyle; aryle éventuellement substitué par alkyle; cycloalkyle éventuellement substitué par alkyle; arylalkyle dans lequel la partie aryle est éventuellement substituée par alkyle ; un atome d'halogène ; un groupe alcényle ; un groupe alcynyle ; ou un groupe SiG₁G₂G₃ ou G₁, G₂ et G₃ sont indépendamment l'un de l'autre alkyle ; alkoxy ; aryle éventuellement substitué par alkyle ou alkoxy ; ou arylalkyle dans lequel la partie aryle est éventuellement substituée par alkyle ou alkoxy.

2. Composition selon la revendication 1 **caractérisée en ce que** M est un métal choisi parmi Pt, Pd et Ni à l'état d'oxydation 0, de préférence le platine à l'état d'oxydation O.

3. Composition selon la revendication 1 ou 2 **caractérisée en ce que**, dans la formule (II):
► T₃ et T₄ représentent un atome d'hydrogène ou forment ensemble un phényle,
► et/ou T₁ et T₂, identiques ou différents, représentent (C₁-C₈)alkyle ou (C₃-C₈)cycloalkyle, de préférence dans le groupe de radicaux comprenant : méthyle, n-propyle, n-pentyle, néo-pentyle (-CH₂-C(CH₃)₃), cyclopentyle, cyclohexyle, adamantyle, allyle (-CH₂-CH=CH₂), méthallyle (-CH₂-C(CH₃)=CH₂), propargyle, homopropargyle (-(CH₂)₂-C≡CH), ou 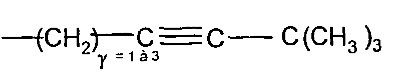 ou 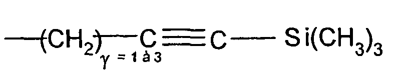 ou bien encore : -(CH₂)_{γ= 1 à 4}-amine (par exemple N(CH₃)₂)
ou -(CH₂)_{γ=1 à 4} -alcoxy (par exemple O(CH₃)₂) :
► et/ou A et B représentent tous deux un atome de carbone.

4. Composition selon l'une quelconque des revendications précédentes, **caractérisée en ce que** dans les formules III.1) et (III.2), les restes électroattracteurs sont choisis dans le groupe comprenant : 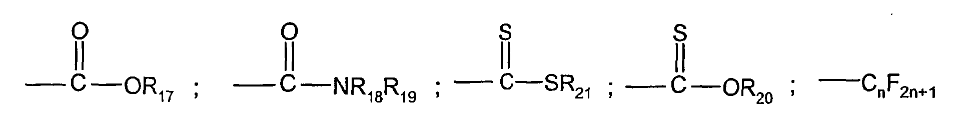 dans laquelle :
R₁₇, R₁₈, R₁₉, R₂₀ est un alkyle, un alcényle, un alcynyle ou un trialkylsilyle substitué ou non et n compris entre 1 et 50.

5. Composition selon l'une quelconque des revendications précédentes, **caractérisée en ce que** :
❖ Z¹, Z², Z³, Z⁴, Z⁵, Z⁶ sont sélectionnés dans le groupe comprenant:
- COOCH₃, -COOCH₂CH₃, -CONC₁₂H₂₅, ou
❖ et dans les cas où les substituants Z¹ et Z² forment deux à deux et avec la triple liaison, dans (III.1), un cycle Cy1 et où Z³ à Z⁶ forment deux à deux, avec ou sans la double liaison, dans (III.2), un cycle Cy2*,* ces cycles Cy1 & Cy2 sont indépendamment et de préférence, choisis dans le groupe comprenant les cycles suivants :

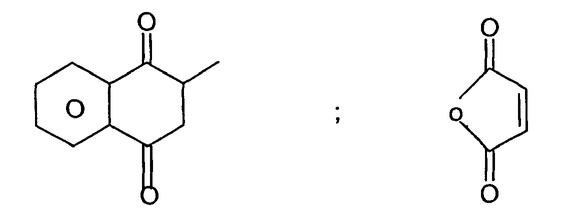

6. Composition selon l'une quelconque des revendications précédentes, **caractérisé en ce que** X représente *O* ; Y₁ et Y₂ représentent indépendamment l'un de l'autre SiR_{d}Rₑ.

7. Composition selon l'une quelconque des revendications précédentes, **caractérisé en ce que** R¹⁰ R¹¹ R¹³ et R¹⁴ sont des atomes d'hydrogène.

8. Composition selon l'une quelconque des revendications précédentes, **caractérisé en ce que caractérisé en ce que** R⁹ et R¹² représentent un atome d'hydrogène ; un groupe alkyle ; aryle éventuellement substitué par alkyle ; ou cycloalkyle éventuellement substitué par alkyle.

9. Composition selon l'une quelconque des revendications précédentes,
**caractérisé en ce que caractérisé en ce que** dans les ligands Lδ de formule (IV) du catalyseur -C- :
- lorsque X représente *O*, Y, et Y₂ représentent indépendamment SiR_{c}R_{d} ; ou
- lorsque X représente NR_{c}, Y₁ et Y₂ représentent indépendamment CRₐR_{b} ; ou
- lorsque X représente CR_{f}R_{g}, Y₁ et Y₂ représentent indépendamment CRₐR_{b},
de préférence, X représente *O* et Y₁ & Y₂ représentent indépendamment SiR_{c}R_{d} dans le ligand Lδ de formule (IV).

10. Composition selon l'une quelconque des revendications précédentes, **caractérisé en ce que caractérisé en ce que** R⁹ = R¹² ; R¹⁰ = R¹³ ; R¹¹ = R¹⁴; et soit Y¹ = Y², soit Y¹ = CRₐR_{b} et Y² = CRₐR_{b} où les deux Rₐ forment ensemble une chaîne symétrique, soit encore Y¹ = SiR_{c}R_{d} et Y² = SiR_{c}R_{d} où les deux R_{c} forment ensemble une chaîne symétrique.

11. Composition selon l'une quelconque des revendications précédentes, **caractérisé en ce que** le catalyseur -C- répond à la formule (I.1) suivante: 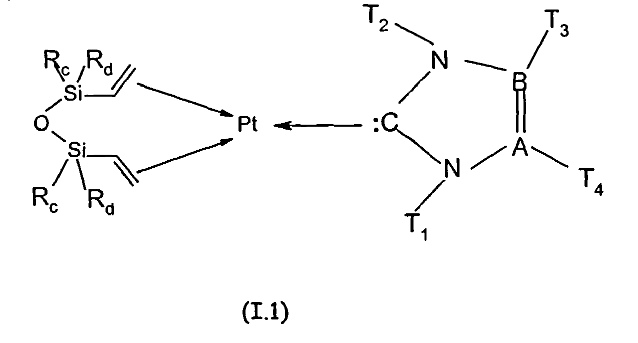 dans laquelle :
R⁹, R¹² représente un atome d'hydrogène ; un groupe (C₁-C₈)alkyle ; ou un groupe (C₃-C₈)cycloalkyle éventuellement substitué par (C₁-C₄)alkyle ;
T₁ et T₂ sont identiques et représentent (C₁-C₈)alkyle ou (C₃-C₈)cycloalkyle ;
R_{c} et R_{d} sont tels que définis à la revendication 1.

12. Composition selon l'une quelconque des revendications 1 à 10, **caractérisé en ce que** le catalyseur -C- est choisi parmi les complexes métalliques de formule (I.2) suivante : 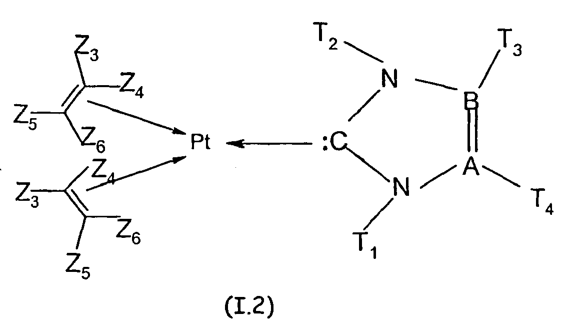 dans laquelle :
T₁ et T₂ sont identiques et sont tels que définis ci-dessus ;
T₃ et T₄ sont tels que définis ci-dessus ;
R_{c} et R_{d} sont tels que définis ci-dessus.

13. Composition selon l'une quelconque des revendications précédentes, **caractérisé en ce que** le catalyseur -C- est choisi parmi les complexes métalliques de formule (I.3) suivante : 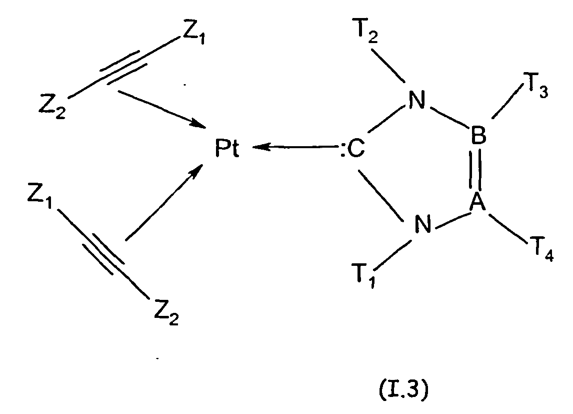 dans laquelle :
T₁ et T₂ sont identiques et sont tels que définis ci-dessus ;
T₃ et T₄ sont tels que définis ci-dessus ;
R_{c} et R_{d} sont tels que définis ci-dessus.

14. Composition selon l'une quelconque des revendications précédentes, **caractérisé en ce** les POS -A- et -B- sont choisis parmi ceux constitués de motifs siloxyles de formule générale :
(R²⁰ )ₓ SiO_{4-x/2} (I')
et/ou de motifs siloxyles de formule :
(R²¹)_{y} (R²²)_{z}SiO_{4-y-z/2} (II')
formules dans lesquelles les divers symboles ont la signification suivante :
- les symboles R²⁰, R²² identiques ou différents, représentent chacun un groupement de nature hydrocarbonée non hydrolysable, ce radical pouvant être :
★ un radical alkyle, halogénoalkyle ayant de 1 à 5 atomes de carbone et comportant de 1 à 6 atomes de chlore et/ou de f luor,
★ des radicaux cycloalkyles et halogénocycloalkyles ayant de 3 à 8 atomes de carbone et contenant de 1 à 4 atomes de chlore et/ou de fluor,
★ des radicaux aryles, alkylaryles et halogénoaryles ayant de 6 à 8 atomes de carbone et contenant de 1 à 4 atomes de chlore et/ou de fluor,
★ des radicaux cyanoalkyles ayant de 3 à 4 atomes de carbone ;
- les symboles R²¹, identiques ou différents, représentent chacun un atome d'hydrogène, un groupement alkényle en C₂-C₆, un groupement hydroxyle, un atome hydrolysable, un groupement hydrolysable ;
- x = un nombre entier égal à 0, 1, 2 ou 3 ;
- y = un nombre entier égal à 0,1, 2 ou 3 ;
- z = un nombre entier égal à 0,1, ou 2 ;
- la somme y+z est comprise entre 1 et 3 ;
avec la condition selon laquelle le POS -A- Si-alcényle comprend au moins un motif R²¹= alcényle par molécule et le POS -B- Si-H comprend au moins un motif R²¹= hydrogène par molécule;
de préférence
R²⁰ = méthyle ; éthyle ; propyle ; isopropyle ; butyle ; isobutyle ; n-pentyle ; t-butyle ; chlorométhyle ; dichlorométhyle ; α-chloroéthyle ; α,β-dichloroéthyle ; fluorométhyle ; difluorométhyle ; α,β-difluoroéthyle ; trifluoro-3,3,3 propyle ; trifluoro cyclopropyle ; trifluoro-4,4,4 butyle ; hexafluoro-3,3,4,4,5,5 pentyle ; β-cyanoéthyle ; γ-cyanopropyle ; phényle : p-chlorophényle ; m-chlorophényle ; dichloro-3,5 phényle ; trichlorophényle ; tétrachlorophényle ; o-, pou m-tolyle ; α,α,α-trifluorotolyle ; xylyles comme diméthyl-2,3 phényle, diméthyl -3,4 phényle et plus préférentiellement encore méthyle, phényle, ces radicaux pouvant être éventuellement halogénés ou bien encore des radicaux cyanoalkyle;
R²¹ = hydrogène ou vinyle.

15. Composition selon l'une quelconque des revendications précédentes, **caractérisé en ce que** les inhibiteurs de réticulation sont choisis parmi :
- les polyorganosiloxanes, avantageusement cycliques, substitués par au moins un alcényle, le tétraméthylvinyltétrasiloxane étant particulièrement préféré,
- les amides insaturés,
- les maléates alkylés, alcénylés ou nlcynylés, le diallylmaléate étant particulièrement préféré,
- les alcools acétyléniques,
- les acétylènes dicarboxylates alkylés, alcénylés ou alcynylés,
- et leurs asssociations.

16. Composition selon l'une quelconque des revendications précédentes à l'exclusion de la revendication 11, **caractérisée en ce qu'**elle comprend au moins un inhibiteur -D- de réticulation et au moins un catalyseur -C- selon la revendication 12 et/ou 13 et **en ce qu'**au moins l'un des substituants Z₁ à Z₆ (de préférence chacun d'eux) de ce (ou ces) catalyseur(s) -C- comportent au moins reste électroattracteur.

17. Composition selon l'une quelconque des revendications précédentes à l'exclusion de la revendication 11, **caractérisée en ce qu'**elle est exempte d'inhibiteur -D- de réticulation, **en ce qu'**elle comprend au moins un catalyseur -C-selon la revendication 12 et/ou 13 et **en ce que** ce (ou ces) catalyseur(s) -C-comprennent des substituants Z₁ à Z₆ exempts de restes électroattracteurs.

18. Complexes métalliques de formule I tels que définis dans la revendication 1, **caractérisés en ce que** :
► le ligand carbène Lγ de formule (II) est tel que:
- T₃ et T₄ peuvent former ensemble et avec A et B quand ceux-ci représentent chacun un atome de carbone, un aryle tel que défini ci-dessus, de préférence un phényle ;
- et/ou T₁ et T₂ représentent indépendamment un radical monovalent de formule (V) suivante :
V₁-V₂ (V)
dans laquelle :
● V₁ est un radical divalent hydrocarboné, de préférence un alkylène,
● V₂ est un radical monovalent choisi dans le groupe des substituants suivants:
◆ Alcoxy, -OR^{O} avec R^{O} correspondant à hydrogène, alkyle, aryle
◆ Amine, de préférence N(R^{O})₂ avec R^{O} correspondant à hydrogène, alkyle, aryle,
- et/ou T₁ et T₂ représentent indépendamment un radical monovalent de formule (W) suivants :
W₁-ω- W₂ (W)
dans laquelle :
● W₁ est un radical divalent hydrocarboné, de préférence un alkylène linéaire ou ramifié en C₁-C₁₀, éventuellement substitué,
● ω représente :
- R¹C = CR¹-
avec R¹ correspondant à H ou alkyle
ou
-C≡C-
● W₂ est un radical monovalent choisi dans le groupe des substituants suivants
● R² = alkyle, H ;
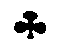 Si-alkyle ou Si-alcoxy, de préférence -Si(R³)₃ avec R³ = alkyle ;
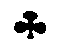 alcool, de préférence -C(R⁴)₂OH avec R⁴ = H ou alkyle ;
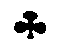 cétone, de préférence : 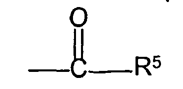 avec R⁵ = alkyle ;
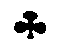 carboxy, de préférence 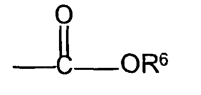 avec R⁶ = alkyle ;
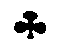 amide, de préférence 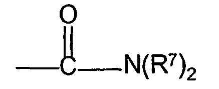 avec R⁷ = H, alkyle ;
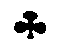 acyle, de préférence 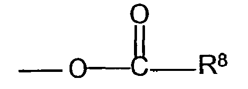 avec R⁸ = alkyle ;
T₁ et T₂ correspondant de préférence indépendamment à un radical W du type 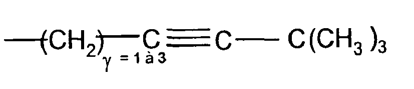 ou 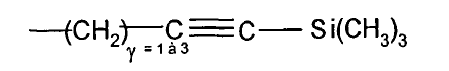 ou bien encore à l'un des motifs suivants méthyle, isopropyle, tert-butyle, n-pentyle, néo-pentyle, cyclopentyle, cyclohexyle, adamantyle, allyle, méthallyle, propargyle ou homopropargyle.
ou bien encore
- les substituants T₁, T₂, T₃ et T₄ peuvent former deux à deux, lorsqu'ils sont situés sur deux sommets adjacents dans la formule (II), une chaîne hydrocarbonée saturée ou insaturée.

19. Complexe métallique de formule (I) selon la revendication 18 de formule suivante: 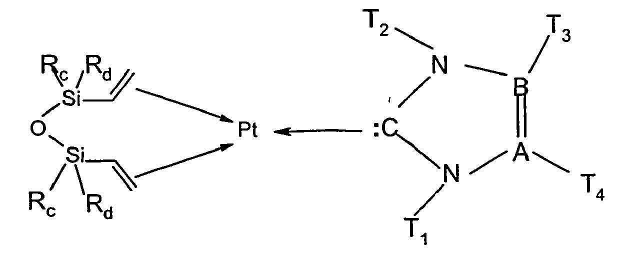 dans laquelle :
R⁹, R¹² représente un atome d'hydrogène ; un groupe (C₁-C₈)alkyle ; ou un groupe (C₃-C₈)cycloalkyle éventuellement substitué par (C₁-C₄)alkyle,
T₁ et T₂ sont identiques et représentent (C₁-C₈)alkyle ou (C₃-C₈)cycloalkyle ;
R_{c} et R_{d} sont tels que définis à la revendication 1.

20. Complexe métallique de formule (I) dans laquelle :
➢ Lγ est tel que défini dans la revendication 1
➢ Lα et Lβ correspondent indépendamment aux composés de formules (II), (III.1) ou (III.2) telles que définies dans la revendication 1.

21. Complexe métallique de formule (I) selon la revendication 20 : de formule (I) suivante : 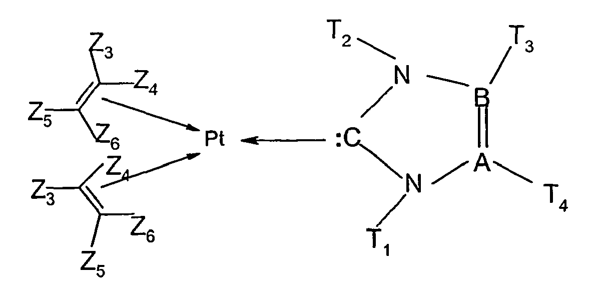 dans laquelle :
T₁ et T₂ sont identiques et sont tels que définis ci-dessus ,
T₃ et T₄ sont tels que définis ci-dessus ;
R_{c} et R_{d} sont tels que définis ci-dessus.

22. Complexe métallique de formule (I) selon la revendication 20 : de formule (I) suivante : 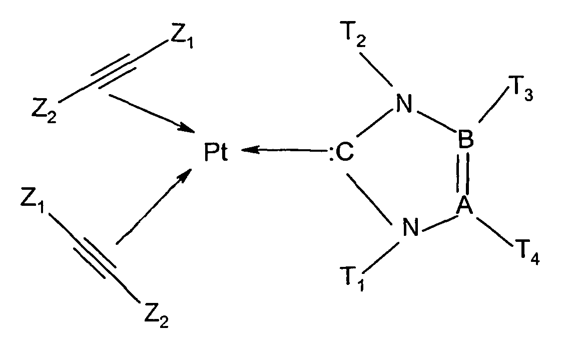 dans laquelle :
T₁ et T₂ sont identiques et sont tels que définis ci-dessus ;
T₃ et T₄ sont tels que définis ci-dessus ;
R_{c} et R_{d} sont tels que définis ci-dessus.

23. Composition catalytique comprenant, à titre de matière active, un ou plusieurs complexes métalliques selon l'une quelconque des revendications 18 à 22.

24. Procédé d'hydrosilylation d'oléfines ou de dérivés acétyléniques, **caractérisé en ce qu'**il consiste à mettre en oeuvre la composition silicone selon l'une quelconque des revendications 1 à 15 et/ou la composition catalytique selon la revendication 23.

25. Procédé selon la revendication 24, **caractérisé en ce que** l'on met en oeuvre une composition selon l'une quelconque des revendications 1 à 15 comprenant au moins un inhibiteur -D- permettant la formation in situ d'au moins un complexe métallique selon l'une quelconque des revendications 20 à 22.

## Claims

1. Hydrosilylation-crosslinkable silicone composition of at least one polyorganosiloxane -A- (POS) bearing ethylenic and/or acetylenic unsaturation(s), using at least one polyorganohydrogenosiloxane -B-, in the presence of a metallic catalyst -C- and optionally comprising at least one inhibitor -D- of the hydrosilylation reaction;
**characterized in that** the catalyst -C- comprises at least one compound selected from the products of formula (I) : 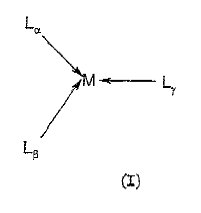 in which
● M represents a metal chosen from the metals of group 8 of the Periodic Table as published in the Handbook of Chemistry and Physics, 65^{th} Edition, 1984-1985;
● Lγ represents a carbene of formula (II): 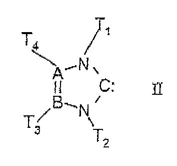 in which:
- A and B independently represent C or N, it being understood that when A represents N, then T₄ represents nothing, and when B represents N, then T₃ represents nothing;
- T₃ and T₄ independently represent a hydrogen atom; an alkyl group; a cycloalkyl group optionally substituted with alkyl or alkoxy; an aryl group optionally substituted with alkyl or alkoxy; an alkenyl group; an alkynyl group; or an arylalkyl group in which the aryl portion is optionally substituted with alkyl or alkoxy; or alternatively
- T₃ and T₄ may form, together with A and B when these each represent a carbon atom, an aryl;
- T₁ and T₂ independently represent an alkyl group; an alkyl group optionally substituted with alkyl; a perfluorinated alkyl group or an alkyl group optionally substituted with a perfluoroalkyl group; a cycloalkyl group optionally substituted with alkyl or alkoxy; an aryl group optionally substituted with alkyl or alkoxy; an alkenyl group; an alkynyl group; or an arylalkyl group in which the aryl portion is optionally substituted with alkyl or alkoxy; or alternatively
- T₁ and T₂ independently represent a monovalent radical of formula (V) below:
V₁-V₂ (V)
in which:
● V₁ is a divalent hydrocarbon-based radical, preferably an alkylene,
● V₂ is a monovalent radical chosen from the following group of substituents:
◆ alkoxy, -OR^{o} with R^{o} corresponding to hydrogen, alkyl or aryl
◆ amine, preferably N(R^{o})₂ with R^{o} corresponding to hydrogen, alkyl or aryl
- T₁ and T₂ independently represent a monovalent radical of formula (W) below:
W₁-ω-W₂ (W)
in which:
●W₁ is a divalent hydrocarbon-based radical, preferably an optionally substituted linear or branched C₁-C₁₀ alkylene,
● ω represents:
-R¹C = CR¹-
with R¹ corresponding to H or alkyl
or
-C≡C-
● W₂ is a monovalent radical chosen from the group of the following substituents
● R² = alkyl, H;
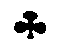 Si-alkyl or Si-alkoxy, preferably -Si(R³)₃ with R³ = alkyl;
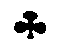 alcohol, preferably -C(R⁴)₂OH with R⁴ = H or alkyl;
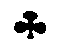 ketone, preferably: 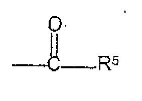 with R⁵ = alkyl;
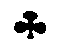 carboxyl, preferably 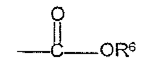 with R⁶ = alkyl;
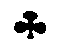 amide, preferably 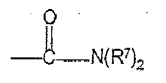 with R⁷ = H, alkyl_{;}
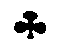 acyl, preferably 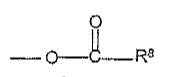 with R⁸ = alkyl;
or alternatively
- the substituents T₁, T₂, T₃ and T₄ may form in pairs, when they are located on two adjacent ring members in formula (II), a saturated or unsaturated hydrocarbon-based chain;
● L_{α} and L_{β} are ligands that may be identical or different, and
→ each represent: 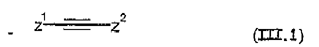 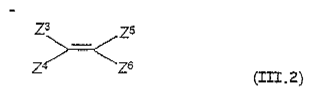 with, in these formulae (III.1) and (III.2):
Z¹, Z², Z³ Z⁴, Z⁵, Z⁶
● each independently representing:
a. hydrogen,
b. a halogen,
c. a cyano,
d. a saturated or unsaturated electron-withdrawing hydrocarbon-based group, preferably adjacent to the double or triple bond,
e. two vicinal Z^{1 to 6} together possibly forming an electron-withdrawing ring advantageously different than the carbene L_{γ} of formula (II) and optionally comprising hetero atoms (preferably O, N or S);
● or the substituents Z¹ and Z² together form, in (III.1), a monovalent alkenyl radical comprising at least one electron-withdrawing residue preferably adjacent to the triple bond;
● or alternatively Z³ to Z⁶ form in pairs, in (III.2), a monovalent alkenyl radical comprising at least one electron-withdrawing residue preferably adjacent to the double bond;
→ or together form the ligand Lδ of formula (IV): 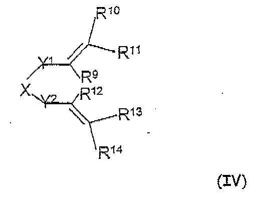 in which:
❖ Y₁ and Y₂ represent, independently of each other, CRₐR_{b} or SiR_{c}R_{d};
❖ X represents O, NRₑ or CR_{f}R_{g};
❖ R¹⁰, R¹¹, R¹³ and R¹⁴, which may be identical or different, are chosen from a hydrogen atom, an alkyl group and an aryl group optionally substituted with alkyl;
❖ R⁹, R¹², Rₐ, R_{b}, R_{c} and R_{d} are chosen independently from a hydrogen atom; an alkyl group; an acyl group; an aryl group optionally substituted with alkyl; a cycloalkyle group optionally substituted with alkyl; and an arylalkyl group in which the aryl portion is optionally substituted with alkyl;
❖ R_{c} and R_{d} are independently chosen from alkyle; aryl optionally substituted with alkyl; cycloalkyl optionally substitued with alkyl; and arylalkyl in which the aryl portion is optionally substituted with alkyl; or alternatively
❖ when Y₁, and Y₂ independently represent SiR_{c}R_{d}, two groups R_{c} linked to two different silicon atoms together form a chain of formula: 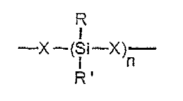 in which n is an integer from 1 to 3; X is as defined above; R and R', which may be identical or different, take any of the meanings given above for R_{c}, it being understood that when n is 2 or 3, only one silicon atom of said chain may be substituted with one or two alkenyl or alkynyl groups; or alternatively
when Y₁ and Y₂ independently represent SiR_{c}R_{d}, two groups R_{c} linked to different silicon atoms together form a saturated hydrocarbon-based chain, the two groups R_{c} together with said silicon atoms and X forming a 6- to 10-membered ring; or alternatively
❖ when Y₁ and Y₂ independently represent CRₐR_{b}, two groups Rₐ linked to different carbon atoms together form a saturated hydrocarbon-based chain, the two groups Rₐ together with the carbon atoms that bear them and X form a 6- to 10-membered ring; and
❖ R_{f} and R_{g} represent, independently of each other, a hydrogen atom; an alkyl group; an acyl group; an aryl group optionally substituted with alkyl; a cycloalkyl group optionally substituted with alkyl; an arylalkyl group in which the aryl portion is optionally substituted with alkyl; a halogen atom; an alkenyl group; an alkynyl group; or a group SiG₁G₂G₃ in which G₁, G₂ and G₃ are, independently of each other, alkyl; alkoxy; aryl optionally substituted with alkyl or alkoxy; or arylalkyl in which the aryl portion is optionally substituted with alkyl or alkoxy.

2. Composition according to Claim 1, **characterized in that** M is a metal chosen from Pt, Pd and Ni in oxidation state 0, preferably platinum in oxidation state 0.

3. Composition according to Claim 1 or 2, **characterized in that**, in formula (II):
➢ T₃ and T₄ represent a hydrogen atom or together form a phenyl,
➢ and/or T₁ and T₂, which may be identical or different, represent (C₁-C₈)alkyl or (C₃-C₈)cycloalkyl, preferably in the group of radicals comprising: methyl, n-propyl, n-pentyl, neopentyl (-CH₂-C(CH₃)₃), cyclopentyl, cyclohexyl, adamantyl, allyl (-CH₂-CH=CH₂), methallyl (-CH₂-C(CH₃)=CH₂), propargyl, homopropargyl (-(CH₂)₂₋C≡CH), or 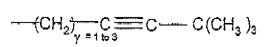 or 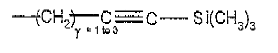 or alternatively: (CH₂)_{γ=1 to 4}-amine (for example N(CH₃)₂)
or - (CH₂) _{γ=1 to 4}-alkoxy (for example O(CH₃)₂);
➢ and/or A and B both represent a carbon atom.

4. Composition according to any one of the preceding claims, **characterized in that**, in formulae (III.1) and (III.2), the electron-withdrawing residues are chosen from the group comprising: 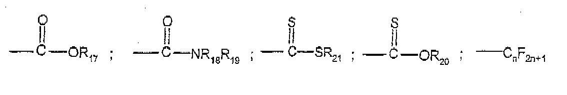 in which:
R₁₇, R₁₈, R₁₉ and R₂₀ are a substituted or unsubstituted alkyl, alkenyl, alkynyl or trialkylsilyl, and n is between 1 and 50.

5. Composition according to any one of the preceding claims, **characterized in that**:
❖ Z¹, Z², Z³, Z⁴, Z⁵ and Z⁶ are selected from the group comprising: -COOCH₃, -COOCH₂CH₃, -CONC₁₂H₂₅, or
❖ and, in the case where the substituents Z¹ and Z² form, in pairs and with the triple bond, in (III.1), a ring Cyl and where Z³ to Z⁶ form in pairs, with or without the double bond, in (III.2), a ring Cy2, these rings Cyl and Cy2 are independently and preferably chosen from the group comprising the following rings:

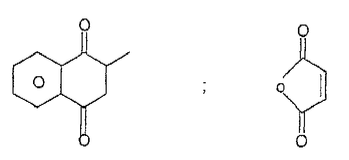

6. Composition according to any one of the preceding claims, **characterized in that** X represents 0; Y₁ and Y₂ independently represent SiR_{d}Rₑ.

7. Composition according to any one of the preceding claims, **characterized in that** R¹⁰, R¹¹, R¹³ and R¹⁴ are hydrogen atoms.

8. Composition according to any one of the preceding claims, **characterized in that** R⁹ and R¹² represent a hydrogen atom; an alkyl group; an aryl group optionally substituted with alkyl; or a cycloalkyl group optionally substituted with alkyl.

9. Composition according to any one of the preceding claims, **characterized in that**, in the ligands Lδ of formula (IV) of the catalyst -C-:
- when X represents 0, Y₁ and Y₂ independently represent SiR_{c}R_{d}; or
- when X represents NRₑ, Y₁ and Y₂ independently represent CRₐR_{b}; or
- when X represents CR_{f}R_{g}, Y₁ and Y₂ independently represent CRₐR_{b},
preferably, X represents O and Y₁ and Y₂ independently represent SiR_{c}R_{d} in the ligand Lδ of formula (IV).

10. Composition according to any one of the preceding claims, **characterized in that** R⁹ = R¹²; R¹⁰ = R¹³; R¹¹ = R¹⁴ and either Y¹ = Y², or Y¹ = CRₐR_{b} and Y² = CRₐR_{b} in which the two Rₐ together form a symmetrical chain, or alternatively Y1 = SiR_{c}R_{d} and Y² = SiR_{c}R_{d} in which the two R_{c} together form a symmetrical chain.

11. Composition according to any one of the preceding claims, **characterized in that** the catalyst -C-corresponds to formula (I.1) below: 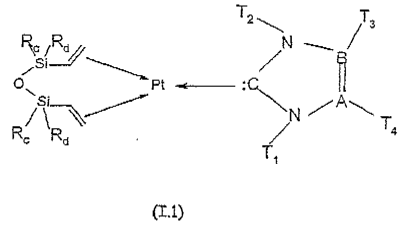 in which;
R⁹ and R¹² represent a hydrogen atom; a (C₁-C₈)alkyl group; or a (C₃-C₈)cycloalkyl group optionally substituted with (C₁-C₄)alkyl;
T₁ and T₂ are identical and represent (C₁-C₈)alkyl or (C₃-C₈)cycloalkyl;
R_{c} and R_{d} are as defined in claim 1.

12. Composition according to any one of Claims 1 to 10, **characterized in that** the catalyst -C- is chosen from the metallic complexes of formula (1.2) below: 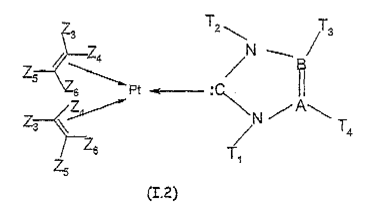 in which:
T₁ and T₂ are identical and are as defined above;
T₃ and T₄ are as defined above;
R_{c} and R_{d} are as defined above.

13. Composition according to any one of the preceding claims, **characterized in that** the catalyst -C- is chosen from the metallic complexes of formula (I.3) below: 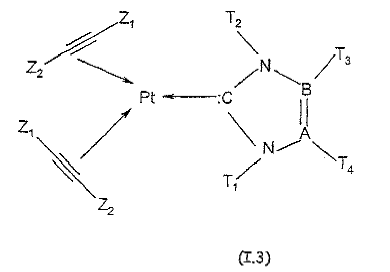 in which:
T₁ and T₂ are identical and are as defined above;
T₃ and T₄ are as defined above;
R_{c} and R_{d} are as defined above.

14. Composition according to any one of the preceding claims, **characterized in that** the POSs -A- and -B- are chosen from those consisting of siloxyl units of general formula:
(R²⁰)ₓ SiO_{4-x/2} (I')
and/or of siloxyl units of formula:
(R²¹)_{y} (R²²)_{z}SiO_{4-y-z/2} (II')
in which formulae the various symbols have the following moaning:
- the symbols R²⁰ and R²², which may be identical or different, each represent a group of nonhydrolyzable hydrocarbon-based nature, this radical possibly being:
* an alkyl or haloalkyl radical containing from 1 to 5 carbon atoms and comprising from 1 to 6 chlorine and/or fluorine atoms,
* cycloalkyl and halocycloalkyl radicals containing from 3 to 8 carbon atoms and comprising from 1 to 4 chlorine and/or fluorine atoms,
* aryl, alkylaryl and haloaryl radicals containing from 6 to 8 carbon atoms and comprising from 1 to 4 chlorine and/or fluorine atoms,
* cyanoalkyl radicals containing 3 or 4 carbon atoms;
- the symbols R²¹, which may be identical or different, each represent a hydrogen atom, a C₂-C₆ alkenyl group, a hydroxyl group, a hydrolyzable atom or a hydrolyzable group;
- x = an integer equal to 0, 1, 2 or 3;
- y = an integer equal to 0, 1, 2 or 3;
- z = an integer equal to 0, 1 or 2;
- the sum y+z is between 1 and 3;
with the condition that the POS -A- Si-alkenyl comprises at least one unit R²¹ = alkenyl per molecule and the POS -B- Size comprises at least one unit R²¹ = hydrogen per molecule;
preferably
R²⁰ = methyl; ethyl; propyl; isopropyl; butyl; isobutyl; n-pentyl; t-butyl; chloromethyl; dichloromethyl; α-chloroethyl; α,β-dichloroethyl; fluoromethyl; difluoromethyl; α,β-difluoroethyl; 3,3,3-trifluoropropyl; trifluorocyclopropyl; 4,4,4-trifluorobutyl; 3,3,4,4,5,5-hexafluoropentyl; β-cyanoethyl; γ-cyanopropyl; phenyl; p-chlorophenyl; m-chlorophenyl; 3,5-dichlorophenyl; trichlorophenyl; tetrachlorophenyl; o-, p- or m-tolyl; α,α,α-trifluorotolyl; xylyls such as 2,3-dimethylphenyl, 3,4-dimethylphenyl and even more preferably methyl or phenyl, these radicals possibly being optionally halogenated or alternatively cyanoalkyl radicals;
R²¹ = hydrogen or vinyl.

15. Composition according to any one of the preceding claims, **characterized in that** the crosslinking inhibitors are chosen from:
- polyorganosiloxanes, which are advantageously cyclic, substituted with at least one alkenyl, tetramethylvinyltetrasiloxane being particularly preferred,
- unsaturated amides,
- alkyl, alkenyl or alkynyl maleates, diallyl maleate being particularly preferred,
- acetylenic alcohols,
- alkyl, alkenyl or alkynyl acetylenedicarboxylates,
- and combinations thereof.

16. Composition according to any one of the preceding claims with the exception of Claim 11, **characterized in that** it comprises at least one crosslinking inhibitor - D- and at least one catalyst -C- according to claim 12 and/or 13 and **in that** at least one of the substituents Z₁ to Z₆ (preferably each of them) of this (or these) catalyst(s) -C- comprise(s) at least one electron-withdrawing residue.

17. Composition according to any one of the preceding claims with the exception of Claim 11, **characterized in that** it is free of crosslinking inhibitor -D-, **in that** it comprises at least one catalyst -C- according to claim 12 and/or 13 and **in that** this (or these) catalyst(s) -C- comprise(s) substituents Z₁ to Z₆ free of electron-withdrawing residues.

18. Metallic complexes of formula I as defined in Claim 1, **characterized in that**:
➢ the carbene ligand Lγ of formula (II) is such that:
- T₃ and T₄ can form, together with A and B when these each represent a carbon atom, an aryl as defined above, preferably a phenyl;
- and/or T₁ and T₂ independently represent a monovalent radical of formula (V) below:
V₁—V₂ (V)
in which:
• V₁ is a divalent hydrocarbon-based radical, preferably an alkylene,
• V₂ is a monovalent radical chosen from the following group of substituents:
◆ alkoxy, -OR^{o} with R^{o} corresponding to hydrogen, alkyl or aryl
◆ amine, preferably N(R^{o})₂ with R^{o} corresponding to hydrogen, alkyl or aryl,
- and/or T₁ and T₂ independently represent a monovalent radical of formula (W) below:
W₁—ω—W₂ (W)
in which:
• W₁ is a divalent hydrocarbon-based radical, preferably an optionally substituted linear or branched C₁-C₁₀ alkylene,
• ω represents:
—R¹C = CR¹-
with R¹ corresponding to H or alkyl
or
-C≡C-
• W₂ is a monovalent radical chosen from the group of the following substituents
• R² = alkyl, H;
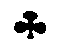 Si-alkyl or Si-alkoxy, preferably - S1(R³)₃
with R³ = alkyle;
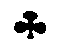 alcohol, preferably -C(R⁴)₂OH with R⁴ = H or alkyl;
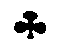 ketone, preferably: 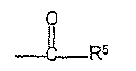 with R⁵ = alkyl;
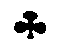 carboxyl, preferably 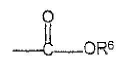 with R⁶ = alkyl;
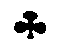 amide, preferably 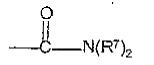 with R⁷ = H, alkyl;
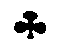 acyl, preferably 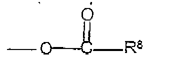 with _{R}⁸ = alkyl;
T₁ and T₂ preferably independently corresponding to a radical W of the type 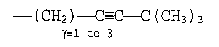 or 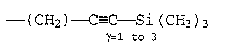 or alternatively to one of the following units: methyl, isopropyl, tert-butyl, n-pentyl, neopentyl, cyclopentyl, cyclohexyl, adamantyl, allyl, methallyl, propargyl or homopropargyl,
or alternatively
- the substituents T₁, T₂, T₃ and T₄ can form in pairs, when they are located on two adjacent ring members in formula (II), a saturated or a unsaturated hydrocarbon-based chain.

19. Metallic complex of formula (I) according to Claim 18, having the following formula: 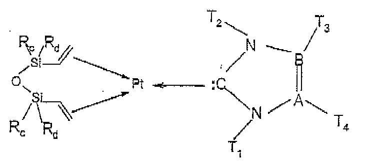 in which:
R⁹ or R¹² represents a hydrogen atom; a (C₁-C₈)alkyl group; or a (C₃-C₈) cycloalkyl group optionally substituted with (C₁-C₄)alkyl;
T₁ and T₂ are identical and represent (C₁-C₈)alkyl or (C₃-C₈)cycloalkyl;
R_{c} and R_{d} are as defined in claim 1.

20. Metallic complex of formula (I) in which:
➢ Lγ is as defined in claim 1
➢ Lα and Lβ independently correspond to the compounds of formula (II), (III.1) or (III.2) as defined in claim 1.

21. Metallic complex of formula (I) according to Claim 20, of formula (I) below: 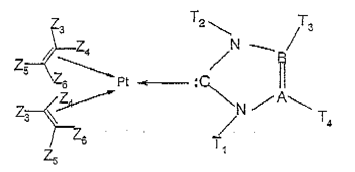 in which:
T₁ and T₂ are identical and are as defined above;
T₃ and T₄ are as defined above;
R_{c} and R_{d} are as defined above.

22. Metallic complex of formula (I) according to Claim 20, of formula (I) below: 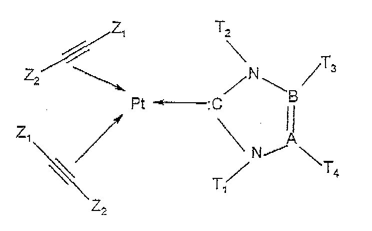 in which:
T₁ and T₂ are identical and are as defined above;
T₃ and T₄ are as defined above;
R_{c} and R_{d} are as defined above.

23. Catalytic composition comprising, as active material, one or more metallic complexes according to any one of Claims 18 to 22.

24. Process for the hydrosilylation of olefins or acetylenic derivatives, **characterized in that** it consists in using the silicone composition according to any one of Claims 1 to 15 and/or the catalytic composition according to Claim 23.

25. Process according to Claim 24, **characterized in that** a composition according to any one of Claims 1 to 15 comprising at least one inhibitor -D- is used, allowing the in situ formation of at least one metallic complex according to any one of Claims 20 to 22.

## Patentansprüche

1. Silicon-Zusammensetzung, vernetzbar durch Hydrosilylierung von mindestens einem PolyOrganoSiloxan -A- (POS) als Träger von ethylenischer(n) und/oder acetylenischer(n) Ungesättigtheit (en) mit Hilfe von mindestens einem Polyorganohydrogenosiloxan -B-, in Anwesenheit von einem metallischen Katalysator -C-, und gegebenenfalls umfassend mindestens einen Inhibitor -D- der Reaktion der Hydrosilylierung,
**dadurch gekennzeichnet, dass** der Katalysator -C- mindestens eine Verbindung umfasst, ausgewählt unter den Produkten der Formel (I) : 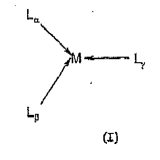 in der
. M ein Metall darstellt, ausgewählt unter den Metallen der Gruppe 8 des Periodensystems der Elemente, wie es veröffentlicht ist in Handbook of Chemistry and Physics, 65-Auflage, 1984-1985;
. L_{γ} ein Carben der Formel (II): 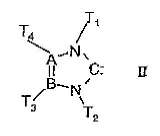 darstellt, in der
■ A und B unabhängig C oder N darstellen, mit der Maßgabe, dass in dem Fall, wo A N darstellt, dann T₄ nichts darstellt und wenn B N darstellt, dann T₃ nichts darstellt;
■ T₃ und T₄ unabhängig ein Wasserstoffatom; eine Gruppe Alkyl; Cycloalkyl, gegebenenfalls substituiert durch Alkyl oder Alkoxy; Aryl, gegebenenfalls substituiert durch Alkyl oder Alkoxy; Alkenyl; Alkinyl; oder Arylalkyl, worin der Teil Aryl gegebenenfalls substituiert ist durch Alkyl oder Alkoxy; darstellen, oder auch
■ T₃ und T₄ zusammen und mit A und B, wenn diese jeweils ein Kohlenstoffatom bedeuten, ein Aryl bilden können;
■ T₁ und T₂ unabhängig eine Gruppe Alkyl; eine Gruppe Alkyl, gegebenenfalls substituiert durch Alkyl,; eine Gruppe Alkyl, perfluoriert oder gegebenenfalls substituiert durch eine Gruppe Perfluoralkyl; Cycloalkyl, gegebenenfalls substituiert durch Alkyl oder Alkoxy; Aryl, gegebenenfalls substituiert durch Alkyl oder Alkoxy; Alkenyl; Alkenyl; oder Arylalkyl, worin der Teil Aryl gegebenenfalls substituiert ist durch Alkyl oder Alkoxy; darstellen, oder auch
■ T₁ und T₂ unabhängig einen monovalenten Rest der folgenden Formel (V) darstellen:
V₁ - V₂ (V)
in der
• V₁ ein divalenter Kohlenwasserstoff-Rest ist, vorzugsweise ein Alkylen,
• V₂ ein monovalenter Rest ist, gewählt aus der Gruppe der folgenden Substituenten:
◆ Alkoxy, -OR^{o} mit R^{o} entsprechend Wasserstoff, Alkyl, Aryl ,
◆ Amin, vorzugsweise N(R^{o})₂ mit R^{o} entsprechend Wasserstoff, Alkyl, Aryl,
■ Ti und T₂ unabhängig einen monovalenten Rest der folgenden Formel (W) darstellen:
W₁ - ω - W₂ (W)
in der
• W₁ ein divalenter Kohlenwasserstoff-Rest ist, vorzugsweise ein lineares oder verzweigtes Alkylen mit 1 bis 10 Kohlenstoffatomen, gegebenenfalls substituiert,
• ω darstellt:
-R¹C=CR¹-, mit R¹ entsprechend Wasserstoff oder Alkyl, oder -C≡C-,
• W₂ ein monovalenter Rest ist, gewählt aus der Gruppe der folgenden Substituenten:
• R² = Alkyl, H;
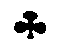 Si-Alkyl oder Si-Alkoxy, vorzugsweise -Si(R³)₃ mit R³ = Alkyl;
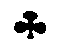 Alkohol, vorzugsweise -C(R⁴)₂OH mit R⁴ = H oder Alkyl;
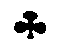 Keton, vorzugsweise 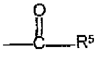 mit R⁵ = Alkyl;
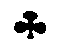 Carboxy, vorzugsweise 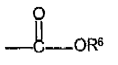 mit R⁶ = Alkyl;
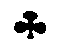 Amid, vorzugsweise 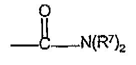 mit R⁷ = H, Alkyl;
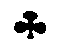 Acyl, vorzugsweise 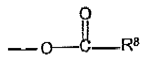 mit R⁸ = Alkyl; oder auch
■ die Substituenten T₁, T₂, T₃ und T₄ paarweise, wenn sie sich in der Formel (II) auf zwei benachbarten Scheitelpunkte befinden, eine gesättigte oder ungesättigte Kohlenwasserstoff-Kette bilden können;
. wobei L_{α} und L_{β} untereinander gleich oder verschieden sind und
→ jeweils darstellen : 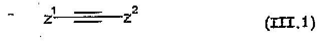 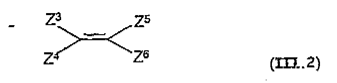 mit in diesen Formeln (III,1) und (III.2):
Z¹, Z², Z³, z⁴, Z⁵, Z⁶,
• die unabhängig jeweils darstellen:
a. Wasserstoff
b. ein Halogen,
c. ein Cyano,
d. eine gesättigte oder ungesättigte elektronenanziehende Gruppe, vorzugsweise benachbart zur Doppelbindung oder Dreifachbindung,
e. zwei vicinale Z^{1bis6} zusammen einen elektronenanziehenden Ring bilden können, vorteilhafterweise verschieden vom Carben L_{γ} der Formel (II) und gegebenenfalls umfassend Heteroatome (vorzugsweise 0, N, S);
• oder die Substituenten Z¹ und Z² zusammen in (III.1) einen monovalenten Rest Alkenyl bilden, umfassend mindestens einen elektronenanziehenden Rest, vorzugsweise benachbart zur Dreifachbindung;
• oder auch die Substituenten Z³ bis Z⁶ paarweise in (III.2) einen monovalenten Rest Alkenyl bilden, umfassend mindestens einen elektronenanziehenden Rest, vorzugsweise benachbart zur Doppelbindung;
→ oder zusammen den Liganden Ls der Formel (IV) 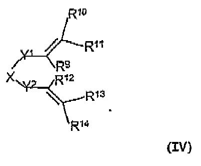 bilden,
in der
❖ Y₁ und Y₂ unabhängig voneinander CRₐR_{b} oder SiR_{c}R_{d} darstel - len;
❖ X O, NRₑ oder CR_{f}R_{g} darstellt;
❖ R¹⁰, R¹⁰, R¹³ und R¹⁴, gleich oder verschieden, ausgewählt werden unter einem Wasserstoffatom, einer Gruppe Alkyl und einer Gruppe Aryl, gegebenenfalls substituiert durch Alkyl;
❖ R⁹, R¹², Rₐ, R_{b}, R_{c} und R_{d} unabhängig ausgewählt werden unter einem Wasserstoffatom; einer Gruppe Alkyl; Acyl; Aryl, gegebenenfalls substituiert durch Alkyl; Cycloalkyl, gegebenenfalls substituiert durch Alkyl; und Arylalkyl, worin der Teil Aryl gegebenenfalls substituiert ist durch Alkyl;
❖ R_{c} und R_{d} unabhängig ausgewählt werden unter Alkyl; Aryl, gegebenenfalls substituiert durch Alkyl; Cycloalkyl, gegebenenfalls substituiert durch Alkyl; und Arylalkyl, worin der Teil Aryl gegebenenfalls substituiert ist durch Alkyl; oder
❖ wenn Y₁ und Y₂ unabhängig SiR_{c}R_{d} darstellen, bilden zwei Gruppen R_{c}, die an zwei unterschiedliche Siliciumatome gebunden sind, zusammen eine Kette der Formel: 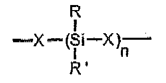 in der
n ein Ganzes von 1 bis 3 darstellt; X wie oben definiert ist; R und R¹, gleich oder verschieden, irgendeine der oben bei Rₑ genannten Bedeutungen annehmen, mit der Maßgabe, dass in dem Fall, wo n gleich 2 oder 3 ist, ein einziges Siliciumatom der genannten Kette durch eine oder zwei Gruppen Alkenyl oder Alkinyl substituiert sein kann; oder wenn Y₁ und Y₂ unabhängig SiR_{c}R_{d} darstellen, bilden zwei Gruppen R_{c}, die an unterschiedliche Siliciumatome gebunden sind, zusammen eine gesättigte Kohlenwasserstoff-Kette, wobei die zwei Gruppen R_{c} zusammen mit den genannten Siliciumatomen und X einen Ring mit 6 bis 10 Kettengliedern bilden; oder
◆ wenn Y₁ und Y₂ unabhängig CRₐR_{b} darstellen, bilden zwei Gruppen Rₐ, die an unterschiedliche Siliciumatome gebunden sind, zusammen eine gesättigte Kohlenwasserstoff-Kette, wobei die zwei Gruppen Rₐ zusammen mit den Kohlenstoffatomen, die sie tragen, und X einen Ring mit 6 bis 10 Kettengliedern bilden; und
◆ R_{f} und R_{g} unabhängig voneinander ein Wasserstoffatom, eine Gruppe Alkyl; Acyl; Aryl, gegebenenfalls substituiert durch Alkyl; Cycloalkyl, gegebenenfalls substituiert durch Alkyl; Arylalkyl, worin der Teil Aryl gegebenenfalls substituiert, ist durch Alkyl; ein Halogenatom; eine Gruppe Alkenyl; eine Gruppe Alkinyl; oder eine Gruppe SiG₁G₂G₃ darstellen oder G₁, G₂ und G₃ sind unabhängig voneinander Alkyl; Alkoxy; Aryl, gegebenenfalls substituiert durch Alkyl oder Talkoxy; oder Arylalkyl, worin der Teil Aryl gegebenenfalls substituiert ist durch Alkyl oder Alkoxy.

2. Zusammensetzung nach Anspruch 1, **dadurch gekennzeichnet, dass** M ein Metall ist, ausgewählt unter Pt, Pd und Ni im Oxidationszustand 0, vorzugsweise Platin im Oxidationszustand 0.

3. Zusammensetzung nach Anspruch 1 oder 2, **dadurch gekennzeichnet, dass** in der Formel (II):
➢ T₃ und T₄ ein Wasserstoffatom darstellen oder zusammen ein Phenyl bilden, und/oder
➢ T₁ und T₂, gleich oder verschieden, (C₁-C₂)-Alkyl oder (C₃-C₈)-Cycloalkyl darstellen, vorzugsweise in der Gruppe von Resten, die umfasst: Methyl, n-Propyl, n-Pentyl, Neopentyl (-CH₂-C(CH₃)₃), Cyclopentyl, Cyclohexyl, Adamantyl, Allyl (-CH₂-CH=CH₂), Methallyl (-CH₂-C(CH₃)=CH₂), Propargyl, Homopropargyl (-(CH₂)₂-C=CH) oder 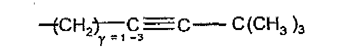 oder 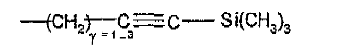 oder auch
- (CH₂)_{γ=1bis4}-Amin (beispielsweise N(CH₃)₂) oder
- (CH₂)_{γ=1bis4} -Alkoxy (beispielsweise O (CH₃)₂) ;
➢ und/oder A und B beide ein Kohlenstoffatom darstellen.

4. Zusammensetzung nach irgendeinem der vorstehenden Ansprüche, **dadurch gekennzeichnet, dass** in den Formeln (III.1) und (III.2) die elektronenanziehenden Reste aus der Gruppe gewählt werden, die umfasst: 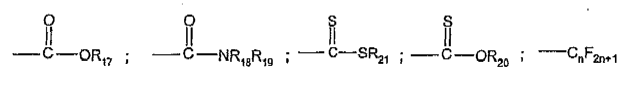 in denen R₁₇, R₁₈, R₁₉, R₂₀ ein Alkyl, ein Alkenyl, ein Alkinyl oder ein Trialkylsilyl, substituiert oder nicht, bedeuten und n zwischen einschließlich 1 und 50 beträgt.

5. Zusammensetzung nach irgendeinem der vorstehenden Ansprüche, **dadurch gekennzeichnet, dass**
◆ Z¹, Z², Z³, Z⁴, Z⁵, Z⁶ aus der Gruppe gewählt werden, die umfasst:
-COOCH₃, -COOCH₂CH₃, -CONC₁₂H₂₅, oder
◆ und in dem Fall, wo die Substituenten Z¹ und Z² paarweise und mit der Dreifachbindung in (III.1) einen Ring Cyl bilden, und wo Z³ bis Z⁶ paarweise mit oder ohne die Doppelbindung in (III.2) einen Ring Cy2 bilden, werden diese Ringe unabhängig und vorzugsweise aus der Gruppe gewählt, welche die folgenden Ringe umfasst:

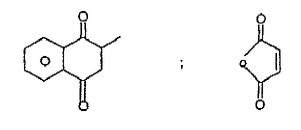

6. Zusammensetzung nach irgendeinem der vorstehenden Ansprüche, **dadurch gekennzeichnet, dass** X O darstellt; Y₁ und Y₂ unabhängig voneinander SiR_{d}Rₑ darstellen.

7. Zusammensetzung nach irgendeinem der vorstehenden Ansprüche, **dadurch gekennzeichnet, dass** R¹⁰, R¹¹, R¹³ und R¹⁴ Wasserstoffatome sind.

8. Zusammensetzung nach irgendeinem der vorstehenden Ansprüche, **dadurch** gekenntzeichnet, dass R⁹ und R¹² ein Wasserstoffatom; eine Gruppe Alkyl; Aryl, gegebenenfalls substituiert durch Alkyl; oder Cycloalkyl, gegebenenfalls substituiert durch Alkyl, darstellen.

9. Zusammensetzung nach irgendeinem der vorstehenden Ansprüche, **dadurch gekennzeichnet, dass** in den Liganden Lδ der Formel (IV) des Katalysators -C- :
- wenn X O darstellt, Y₁ und Y₂ unabhängig SiR_{c}R_{d} bedeuten, oder
- wenn X NRₑ darstellt, Y₁ und Y₂ unabhängig CRₐR_{b} bedeuten;
oder
- wenn X CR_{f}R_{g} darstellt, Y₁ und Y₂ unabhängig CRₐR_{b} bedeuten, wobei vorzugsweise in dem Liganden Lδ der Formel (IV) X 0 darstellt und Y₁ und Y₂ unabhängig SiR_{c}R_{d} bedeuten.

10. Zusammensetzung nach irgendeinem der vorstehenden Ansprüche, **dadurch gekennzeichnet, dass** R⁹ = R¹² ; R¹⁰ = R¹³ ; R¹¹ = R¹⁴ sind; und entweder Y¹ = Y² oder Y¹ = CRₐR_{b} und Y² = CRₐR_{b} sind, worin die zwei Rₐ zusammen eine symmetrische Kette bilden, oder auch Y¹ = SiR_{c}R_{d} und Y² = SiR_{c}R_{d} sind, worin die zwei Rc zusammen eine symmetrische Kette bilden.

11. Zusammensetzung nach irgendeinem der vorstehenden Ansprüche, **dadurch gekennzeichnet, dass** der Katalysator -C- der folgenden Formel (I.1) entspricht: 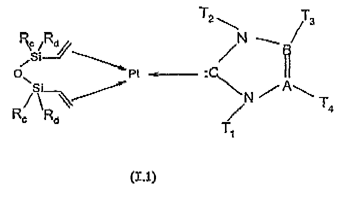 in der
R⁹, R¹² ein Wasserstoffatom, eine Gruppe (C₁-C₈)-Alkyl; oder eine Gruppe (C₃-C₈)-Cycloalkyl darstellen, gegebenenfalls substituiert durch (C₁-C₄) -Alkyl;
T₁ und T₂ gleich sind und (C₁-C₈) -Alkyl oder (C₃-C₈)-Cycloalkyl darstellen;
R_{c} und R_{d} wie in Anspruch 1 definiert sind,

12. Zusammensetzung nach irgendeinem der Ansprüche 1 bis 10, **dadurch gekennzeichnet, dass** der Katalysator -C- unter den metallischen Komplexen der folgenden Formel (I.2) ausgewählt wird: 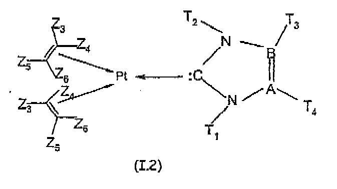 in der
T₁ und T₂ gleich und wie oben definiert sind;
T₃ und T₄ wie oben definiert sind;
R_{c} und R_{d} wie oben definiert sind.

13. Zusammensetzung nach irgendeinem der vorstehenden Ansprüche, **dadurch gekennzeichnet, dass** der Katalysator -C- unter den metallischen Komplexen der folgenden Formel (I.3) ausgewählt wird: 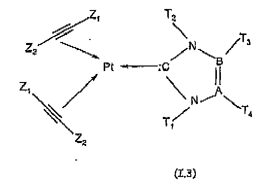 in der
Ti und T₂ gleich und wie oben definiert sind;
T₃ und T₄ wie oben definiert sind;
R_{c} und R_{d} wie oben definiert sind.

14. Zusammensetzung nach irgendeinem der vorstehenden Ansprüche,
**dadurch gekennzeichnet, dass** die POS -A- und -B- unter denjenigen ausgewählt werden, die von Struktureinheiten Siloxyl der folgenden allgemeinen Formel gebildet werden:
(R²⁰)ₓ SiO_{4-x/2} (I')
und/oder von Struktureinheiten Siloxyl der Formel:
(R²¹)_{y} (R²²)₂ SiO_{4-y-z/2} (II')
in denen die verschiedenen Symbole die folgenden Bedeutungen besitzen:
- die Symbole R²⁰, R²², gleich oder verschieden, stellen jeweils eine Gruppe von Kohlenwasserstoff-Beschaffenheit dar, nicht hydrolysierbar, wobei dieser Rest sein kann:
* ein Rest Alkyl, Halogenalkyl mit 1 bis 5 Kohlenstoffatomen und umfassend 1 bis 6 Atome von Chlor und/oder Fluor,
* Reste Cycloalkyl und Halogencycloalkyl mit 3 bis 8 Kohlenstoffatomen und enthaltend 1 bis 4 Atome von Chlor und/oder Fluor,
* Reste Aryl, Alkylaryl und Halogenaryl mit 6 bis 8 Kohlenstoffatomen und enthaltend 1 bis 4 Atome von Chlor und/oder Fluor,
* Reste Cyanoalkyl mit 3 bis 4 Kohlenstoffatomen;
- die Symbole R²¹, gleich oder verschieden, stellen jeweils ein Wasserstoffatom, eine Gruppe Alkenyl mit 2 bis 6 Kohlenstoffatomen, eine Gruppe Hydroxyl, ein hydrolysierbares Atom, eine hydrolysierbare Gruppe dar;
- x = eine ganze Zahl gleich 0, 1, 2 oder 3;
- y = eine ganze Zahl gleich 0, 1, 2 oder 3;
- z = eine ganze Zahl gleich 0, 1 oder 2;
- die Summe y+z beträgt zwischen einschließlich 1 und 3;
unter der Bedingung, wonach das POS -A- Si-alkenyl mindestens eine Struktureinheit R²¹ = Alkenyl pro Molekül umfasst und das POS -B- Si-H mindestens eine Struktureinheit R²¹ = Wasserstoff pro Molekül umfasst;
vorzugsweise
R²⁰ = Methyl; Ethyl; Propyl; Isopropyl; Butyl; Isobutyl; n-Pentyl; tert.-Butyl; Chlormethyl; Dichlormethyl; α-Chlorethyl; α,β-Di-chlorethyl; Fluormethyl; Difluormethyl; α,β-Difluorethyl; 3,3,3-Trifluorpropyl; Trifluorcyclopropyl; 4,4,4-Trifluorbutyl; 3,3,4,4,5,5-Hexafluorpentyl; β-Cyanoethyl; γ-Cyanopropyl; Phenyl; p-Chlorphenyl; m-Chlorphenyl; 3,5-Dichlorphenyl; Trichlorphenyl; Tetrachlorphenyl; o-, p- oder m-Tolyl; α,α,α-Trifluortolyl; Xylyle wie 2,3-Dimethylphenyl, 3,4-Dimethylphenyl und noch mehr bevorzugt Methyl, Phenyl, wobei diese Reste gegebenenfalls halogeniert sein können, oder auch Reste Cyanoalkyl;
R²¹ = Wasserstoff oder Vinyl.

15. Zusammensetzung nach irgendeinem der vorstehenden Ansprüche, **dadurch gekennzeichnet, dass** die Inhibitoren der Vernetzung ausgewählt werden unter:
- den Polyorganosilaxanen, vorteilhafterweise cyclischen, substituiert durch mindestens ein Alkenyl, wobei Tetramethylvinyltetrasiloxan besonders bevorzugt ist,
- den ungesättigten Amiden,
- den Alkyl-, Alkenyl- oder Alkinyl-maleaten, wobei das Diallylmaleat besonders bevorzugt ist,
- den acetylenischen Alkoholen,
- den acetylenischen Alkyl-, Alkenyl- oder Alkinyl-dicarboxylaten,
- und ihren Assoziationen.

16. Zusammensetzung nach irgendeinem der vorstehenden Ansprüche mit Ausschluss von Anspruch 11, **dadurch gekennzeichnet, dass** sie mindestens einen Inhibitor -D- der Vernetzung und mindestens einen Katalysator -C- nach Anspruch 12 und/oder 13 umfasst, und **dadurch**, dass mindestens einer der Substituenten Z₁ bis Z₆ (vorzugsweise jeder von ihnen) von dem oder den Katalysator(en) -C- mindestens einen elektronenanziehenden Rest umfasst.

17. Zusammensetzung nach irgendeinem der vorstehenden Ansprüche mit Ausschluss von Anspruch 11, **dadurch gekennzeichnet, dass** sie frei ist von Inhibitor -D- der Vernetzung, und **dadurch**, dass sie mindestens einen Katalysator -C- nach Anspruch 12 und/oder 13 umfasst, und **dadurch**, dass diese(r) Katalysator(en) -C- Substituenten Z₁ bis Z₆ umfasst(en), die frei sind von elektronenanziehenden Resten.

18. Metallische Komplexe der Formel I wie in Anspruch 1 definiert, **dadurch gekennzeichnet, dass**
► der Carben-Ligand Ly der Formel (II) derart ist, dass;
- T₃ und T₄ zusammen und mit A und B, wenn diese jeweils ein Kohlenstoffatom bedeuten, ein wie oben definiertes Aryl bilden können, vorzugsweise ein Phenyl; und/oder
- T₁ und T₂ unabhängig einen monovalenten Rest der folgenden Formel (V) darstellen:
V₁ ― V₂ (V)
in der
• V₁ ein divalenter Kohlenwasserstoff-Rest ist, vorzugsweise ein Alkylen,
• V₂ ein monovalenter Rest ist, gewählt aus der Gruppe der folgenden Substituenten:
◆ Alkoxy, -OR° mit R° entsprechend Wasserstoff, Alkyl, Aryl,
◆ Amin, vorzugsweise N(R°)₂ mit R° entsprechend Wasserstoff, Alkyl, Aryl, und/oder
- T₁ und T₂ unabhängig einen monovalenten Rest der folgenden Formel (W) darstellen:
W₁ ― ω — W₂ (W)
in der
• W₁ ein divalenter Kohlenwasserstoff-Rest ist, vorzugsweise ein lineares oder verzweigtes Alkylen mit 1 bis 10 Kohlenstoffatomen, gegebenenfalls substituiert,
• ω darstellt:
- R¹C=CR¹-, mit R¹ entsprechend Wasserstoff oder Alkyl, oder -C≡C-,
• W₂ ein monovalenter Rest ist, gewählt aus der Gruppe der folgenden Substituenten:
• R² = Alkyl, H;
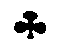 Si-Alkyl oder Si-Alkoxy, vorzugsweise -Si(R³)₃ mit R³ =Alkyl;
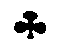 Alkohol, vorzugsweise -C(R⁴) zOH mit R⁴ = H oder Alkyl;
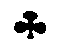 Keton, vorzugsweise 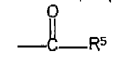 mit R⁵ = Alkyl;
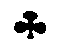 Carboxy, vorzugsweise 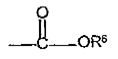 mit R⁶ =Alkyl;
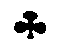 Amid, vorzugsweise 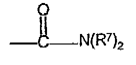 mit R⁷ = H, Alkyl;
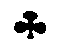 Acyl, vorzugsweise 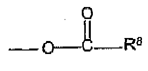 mit R⁸ = Alkyl;
wobei T₁ und T₂ vorzugsweise unabhängig einem Rest W vom Typ 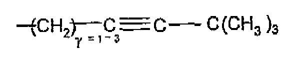 oder 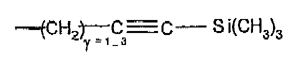 oder auch einer der folgenden Struktureinheiten entsprechen: Methyl, Isopropyl, tert.-Butyl, n-Pentyl, Neopentyl, Cyclopentyl, Cyclohexyl, Adamantyl, Allyl, Methallyl, Propargyl oder Homopropargyl,
oder auch
- die Substituenten. T₁, T₂, T₃ und T₄ paarweise, wenn sie sich in der Formel (II) auf zwei benachbarten Scheitelpunkten befinden, eine gesättigte oder ungesättigte Kohlenwasserstoff-Kette bilden können.

19. Metallischer Komplex der Formel (I) nach Anspruch 18 der folgenden Formel: 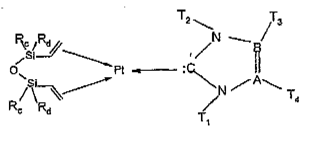 in der
R⁹, R¹² ein Wasserstoffatom, eine Gruppe (C₁-C₈)-alkyl; oder eine Gruppe (C₃-C₈)-cycloalkyl darstellen, gegebenenfalls substituiert durch (C₁-C₄)- alkyl;
T₁ und T₂ gleich sind und (C₁-C₈)-alkyl oder (C₃-C₈)-cycloalkyl darstellen;
Rc und Rd wie in Anspruch 1 definiert sind.

20. Metallischer Komplex der Formel (I), in der
► Lγ wie in Anspruch 1 definiert ist,
►Lα und Lβ unabhängig den Verbindungen der Formeln (II), (III.1) oder (III.2) entsprechen, wie in Anspruch 1 definiert.

21. Metallischer Komplex der Formel (I) nach Anspruch 20 der folgenden Formel: 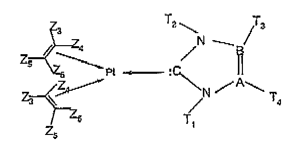 in der
T₁ und T₂ gleich und wie oben definiert sind;
T₃ und T₄ wie oben definiert sind;
Rc und Rd wie oben definiert sind.

22. Metallischer Komplex der Formel (I) nach Anspruch 20 der folgenden Formel: 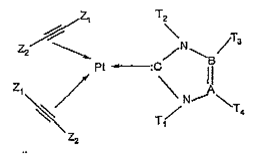 in der
T₁ und T₂ gleich und wie oben definiert sind;
T₃ und T₄ wie oben definiert sind;
R_{c} und R_{d} wie oben definiert sind.

23. Katalytische Zusammensetzung, umfassend als aktives Material einen oder mehrere metallische Komplexe nach irgendeinem der Ansprüche 18 bis 22.

24. Verfahren zur Hydrosilylierung von Olefinen oder acetylenischen Derivaten, **dadurch gekennzeichnet, dass** es darin besteht, die Silicon-Zusammensetzung nach irgendeinem der Ansprüche 1 bis 15 und/oder die katalytische Zusammensetzung nach Anspruch 23 einzusetzen.

25. Verfahren nach Anspruch 24, **dadurch gekennzeichnet, dass** man eine Zusammensetzung nach irgendeinem der Ansprüche 1 bis 15 einsetzt, die mindestens einen Inhibitor -D- umfasst, der die Bildung in situ von mindestens einem metallischen Komplex nach irgendeinem der Ansprüche 20 bis 22 gewährleistet.
